Europäisches Patentamt

European Patent Office

Office européen des brevets

(11) Veröffentlichungsnummer: **0 494 137 B1**

# (12) EUROPÄISCHE PATENTSCHRIFT

(45) Veröffentlichungstag der Patentschrift: **08.06.94**

(51) Int. Cl.$^5$: **H02M 1/12**

(21) Anmeldenummer: **90901770.9**

(22) Anmeldetag: **12.12.89**

(86) Internationale Anmeldenummer:
**PCT/EP89/01519**

(87) Internationale Veröffentlichungsnummer:
**WO 91/03863 (21.03.91 91/07)**

(54) **VERFAHREN UND VORRICHTUNG ZUM OPTIMIERTEN BETRIEB EINES PULSWECHSELRICHTERS AM NETZ.**

(30) Priorität: **11.09.89 DE 3930294**
**11.09.89 DE 3930295**
**11.09.89 EP 89116810**
**11.09.89 EP 89116809**

(43) Veröffentlichungstag der Anmeldung:
**15.07.92 Patentblatt 92/29**

(45) Bekanntmachung des Hinweises auf die
Patenterteilung:
**08.06.94 Patentblatt 94/23**

(84) Benannte Vertragsstaaten:
**CH DE LI**

(56) Entgegenhaltungen:
**US-A- 3 883 792**

(73) Patentinhaber: **SIEMENS AKTIENGESELL-
SCHAFT**
**Wittelsbacherplatz 2**
**D-80333 München(DE)**

(72) Erfinder: **HOLTZ, Joachim**
**Am Forsthof 16**
**D-5600 Wuppertal(DE)**
Erfinder: **KRAH, Jens, Onno**
**Königsberger Str. 42**
**D-5600 Wuppertal(DE)**

**Beschreibung**

Die Erfindung betrifft ein Verfahren zum optimierten Betrieb eines an ein Netz angeschlossenen Pulswechselrichter sowie eine Vorrichtung hierzu.

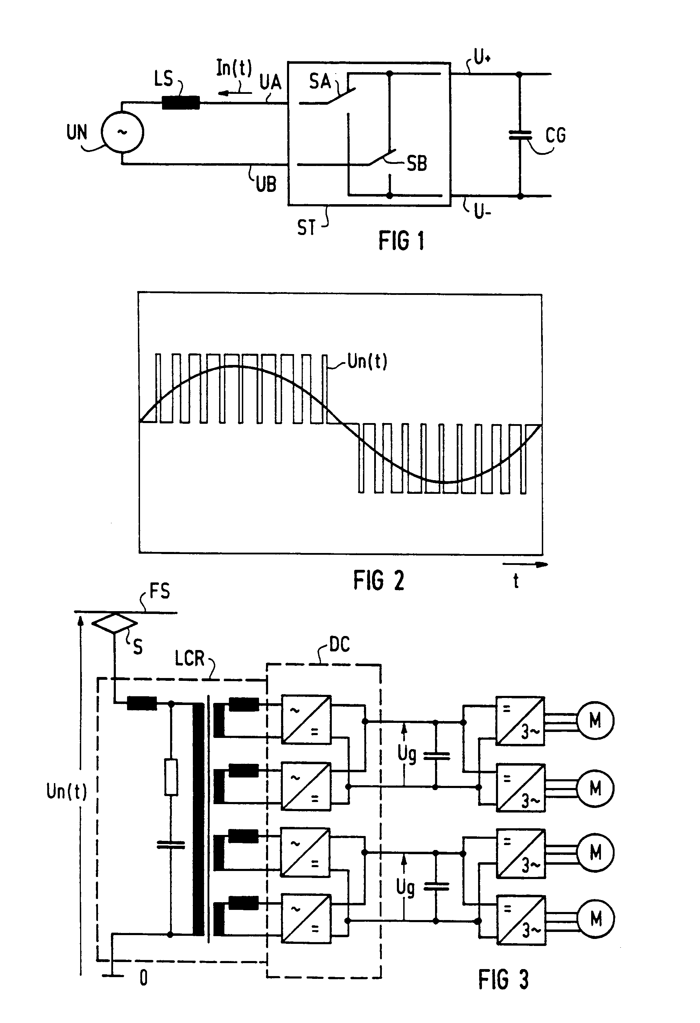

Zur Erläuterung des Problems ist in FIG 1 zunächst ein einphasiger Pulswechselrichter dargestellt, der als "Vierquadranten-Steller" bekannt ist und z.B. im Fall eines Zwischenkreisumrichters mit eingeprägter Gleichspannung an seinen Gleichspannungsanschlüssen auf den Potentialen U+ und U- liegt. Der Schalter SA des Stellers ST verbindet einen Wechselspannungsanschluß alternierend mit den beiden Gleichspannungsanschlüssen, so daß dort das Potential UA nur einen der beiden Werte U+ und U- annehmen kann.

Entsprechendes gilt für den anderen Schalter SB des Stellers und für dessen anderen Wechselspannungsanschluß, dessen Potential UB somit ebenfalls nur einen der beiden Werte U+ und U- annehmen kann. Dieser Wechselrichter besitzt daher an seinen wechselspannungsseitigen Anschlüssen die Anschlußspannung U = UA - UB. FIG 2 zeigt die Spannung U für den Fall, daß die Umschaltimpulse der Schalter durch Modulation einer sinusförmigen Steuerspannung mit einer höherfrequenten Sägezahnspannung gewonnen werden. Durch diese bekannte "Pulsbreitenmodulation" entstehen also eine Spannungsgrundschwingung und Oberschwingung die durch die Gleichspannung U+-U-und die Phasenlage der Umschaltimpulse gegeben sind.

In FIG 1 ist angenommen, daß der Steller über eine vorgeschaltete Steller-Drossel LS an das Versorgungsnetz UN mit der Versorgungsspannung Un(t) angeschlossen ist. Der Spannungsabfall Uls an der Drossel LS kann daher nur die Werte Uls = Un(t)±(U+ - U-) oder Uls = Un(t) (in diesem Fall sind beide Schalter entweder nur mit U+ oder nur mit U- verbunden) annehmen. Entsprechend der Induktivität Ls der Stellerdrossel gilt dann für den Strom In(t), der über die Stellerdrossel zwischen dem Netz und dem Steller ausgetauscht wird: d/dt In(t) = Uls/Ls.

Durch entsprechendes Betätigen der Schalter kann erreicht werden, daß dieser Strom jede beliebige Kurvenform zumindest näherungsweise annimmt. So kann z.B. gefordert werden, daß das Netz möglichst nur mit Wirkstrom belastet wird. An den wechselspannungsseitigen Stelleranschlüssen muß dann eine gepulste Spannung erzeugt werden, deren Grundschwingung gegenüber dem Netz eine Phasenverschiebung aufweist, die von dem Strom und der Induktivität Ls abhängt. Um die Sinusform des Stromes möglichst gut anzunähern, ist aber eine hohe Schaltfrequenz erforderlich, und die Spannungsgrundschwingung ist von vielen Oberschwingungen überlagert.

Diese Spannungsoberschwingungen erzeugen in der Induktivität LS und dem Netz hochfrequente Störströme und können im Netz vorhandene Impedanzen zu Resonanzen anregen.

Falls an die wechselspannungsseitigen Anschlüsse eine Last mit bekannter Impedanz, z.B. eine Drehfeldmaschine, angeschlossen ist, kann natürlich bei vorgegebener Gleichspannung durch den Stromrichter Frequenz und Amplitude des Laststromes eingestellt werden. Manche der dabei auftretenden Oberfrequenzen sind unkritisch, da sie durch die Innenbeschaltung der Last ausreichend gedämpft oder auch kompensiert werden. Andere Oberschwingungen jedoch sind kritisch, weil sie störende Oberschwingungen anderer Größen (z.B. des Drehmoments der angeschlossenen Maschine) hervorrufen. Um in diesem Fall nicht nur Frequenz, Amplitude und Phasenverschiebung für die Grundschwingung von Laststrom und Spannung zu beeinflussen, sondern auch die störenden Oberschwingungskomponenten zu minimisieren, sind bereits verschiedene Steuerverfahren vorgeschlagen worden.

So können z.B. einzelne Oberschwingungskomponenten vollständig eliminiert werden (H.S.Patel, R.F.Hoft: "Generalized Techniques of Harmonic Elimination and Voltage Control of Thyristor Inverters", IEEE Transactions on Industrial Applications, vol.IA-9 (1973), p.310 - 317 und vol.IA-10 (1974), p.666-673). Es kann auch der Effektivwert der Oberschwingungsströme minimiert werden (G.S.Buja, G.B.Indri: "Optimal Pulse-width Modulation for Feeding AC Motors", IEEE Transactions on Industrial Applications, vol.IA-13 (1977), p.38-44) oder es wird der Scheitelstrom des Wechselrichterstroms minimiert (J. Holtz, S. Stadtfeld, H.P. Wurm: "a Novel PWM Technique Minimizing the Peak Inverter Current at Steady-State and Transient Operation", Elektrische Bahnen, vol.81 (1983), p.55-61).

Die jeweils durchzuführenden Schaltvorgänge führen zu bestimmten "Pulsmustern" und sind gegeben durch die "Schaltwinkel", d.h. durch die Zeitpunkte innerhalb einer Periode der Grundschwingung, bei denen im Stromrichter die Schaltvorgänge vorgenommen werden sollen. Für die Optimierung wird in Abhängigkeit von diesen Schaltwinkeln eine "Ziel-Funktion" aufgestellt, d.h. eine Funktion, deren Wert die jeweils zu optimierende Größe (z.B. Amplitude einer bestimmten Oberschwingung oder Scheitel wert des Wechselrichterstroms) angibt. In einem mathematischen Algorithmus wird dann durch Optimierung der Variablen dieser Zielfunktion, z.B. also Variation der Schaltzeitpunkte, das Pulsmuster berechnet, bei dem die Zielfunktion ihren optimalen Wert annimmt. Diese Optimierungsrechnung ist im allgemeinen verhältnismäßig aufwendig und wird nicht in Echtzeit ("on-line-Optimierung") sondern jeweils für einen Satz von

EP 0 494 137 B1

Betriebsbedingungen, insbesondere für verschiedene Aussteuerungen und Leistungsgrade bei stationärem Betrieb des Wechselrichters, ausgeführt. Die sich jeweils ergebenden, optimierten Schaltwinkel werden dann als feste Pulsmuster im Speicherbereich eines Mikrorechners abgelegt ("off-line-Optimierung"). Im Echtzeitbetrieb wird dann unter den abgespeicherten Pulsmustern das zur gewünschten Aussteuerung gehörende Pulsmuster ausgelesen und zur Steuerung des Stromrichters verwendet. Derartig ausgeführte Steuerungen sind z.B. von J. Holtz, S Stadtfeld im "An Economic Very High Power PWM Inverter for Induction Motor Drives", First European Conference on Power Electronics and Applications EPE", Brüssel (1985), Seite 3.75 - 3.80 und von J.A.Taufiq, B.Mellit und C.J. Goodman in "Novel Algorithm for Generating Near Optimal PWM Waveforms for A.C. Truction Drives", IEEE Proceedings, vol.133, part B (1986), p.85 - 94 beschrieben.

Ausgangspunkt für die Optimierung von Pulsmustern ist also die Festlegung eines Zieles, d.h. es muß formuliert werden, was durch die Optimierung erreicht werden soll. Bei der Speisung von Wechselstromlasten ergibt sich dieses Ziel aus den bekannten und im allgemeinen zeitunabhängigen Erfordernissen der Last. Die erwähnten Verfahren sind daher für die Steuerung des maschinenseitigen Pulswechselrichters eines Zwischenkreisumrichters diskutiert. Für den netzseitigen Gleichrichter besteht primär die Forderung, daß dem Netz ein möglichst sinusförmiger Strom entnommen werden soll, dessen Amplitude durch den erforderlichen Laststrom und dessen Phasenlage zur Netzspannung dadurch bestimmt ist, daß das Netz mit keiner oder nur einer definierten Blindlast belastet werden soll.

Wenn die Last nicht einfach aufgebaut ist, sondern z.B. auch Leitungen oder Schwingkreise mit ausgeprägten Eigenresonanz-Frequenzen enthält, so können die bei einer Steuerung nach FIG 2 auftretenden Oberschwingungen diese Eigenresonanzen anregen. Bei der Optimierung der Pulsmuster sollte dann von einer Zielfunktion ausgegangen werden, die auf die Dämpfung dieser Eigenresonanzen besonderes Gewicht legt. Dies setzt aber eine Kenntnis über die Konfiguration der angeschlossenen Last voraus, die bei ausgedehnten Energieverteilungsnetzen schwer zu erhalten ist.

Derartige schwingungsfähige Netzkonfigurationen liegen vor allem in den Versorgungsnetzen der Stromrichter vor, an denen eine oft unbekannte Zahl anderer Geräte mit zeitlich wechselnden Betriebszuständen angeschlossen sind.

Als bevorzugte Anwendung der Erfindung wird im folgenden der Antrieb einer Lokomotive der Baureihe 120 der Deutschen Bundesbahn betrachtet. Es handelt sich also um ein einphasiges Versorgungsnetz mit 16 2/3 Hz, an dem ein Steller angeschlossen ist zur Gleichstromeinspeisung in einen Zwischenkreis vorgegebener Gleichspannung, die über Wechselrichter mehrere Asynchronmotoren speist. Die Erfindung ist aber weder auf den einphasigen Fall noch auf den Gleichrichterbetrieb der speziell dargestellten Stromrichterschaltung beschränkt.

FIG 3 zeigt schematisch den Leistungsteil der Lokomotive, bei dem eine zwischen dem Fahrdraht FS der Oberleitung und einem Erdungsanschluß O liegende Netzspannung Un(t) von etwa 15 kV über einen Stromabnehmer S und ein Oberschwingungsfilter LCR einen Gleichstromsteller speist. Der Gleichstromsteller DC besteht dabei aus vier einzelnen Vier-Quadranten-Stellern, bei denen nach dem Prinzip des Wechselrichters aus FIG 1 jeweils einer der Wechselspannungsanschlüsse über zwei alternierend betätigte Schalter mit den Gleichspannungsanschlüssen verbunden wird.

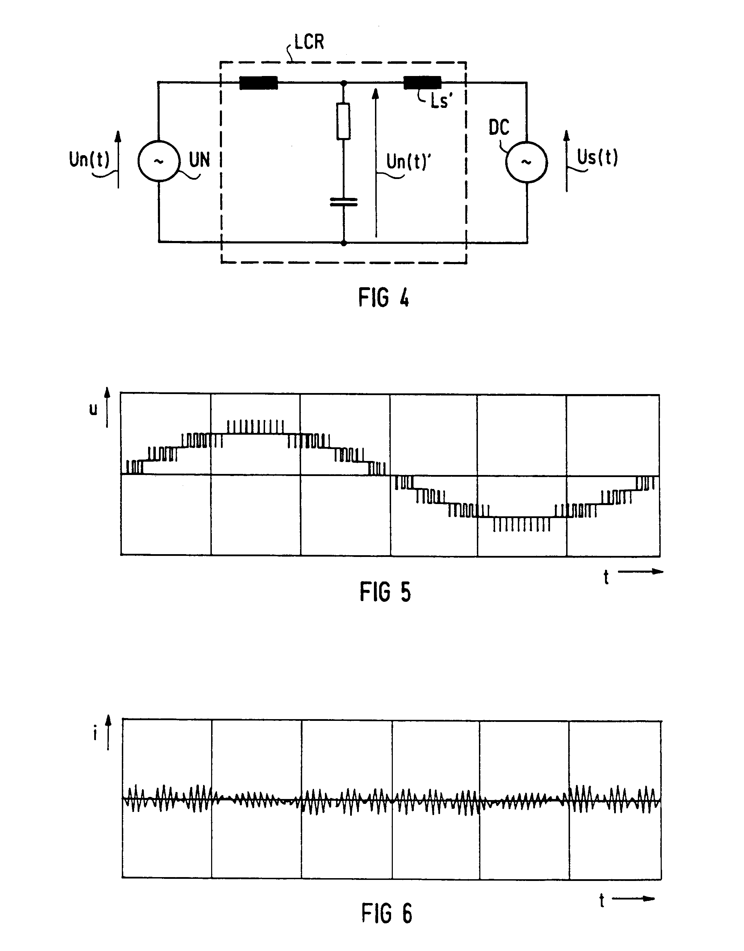

Die einzelnen Vier-Quadranten-Steller sind wechselspannungsseitig transformatorisch in Reihe an das Oberschwingungsfilter angeschlossen. An die Stelle des einzigen Potentials U+ in FIG 1 treten daher durch die additive Wirkung der parallel arbeitenden Einzel-Steller vier Potentiale, und das gleiche gilt für das Potential U−. In dem Ersatzschaltbild der FIG 4 sind die Streuinduktivitäten an den Wechselspannungsanschlüssen der Steller zu einer Steller-Ersatzdrossel Ls' zusammengefaßt, und für den Spannungsabfall Uls' an dieser Steller-Ersatzdrossel gilt dann:

Uls' = Un(t)'- Us(t)

wobei Un(t)' die sekundärseitige Transformatorspannung und Us eine Stellerersatzspannung ist, für die gilt:

Us(t) = k.Ug.

Die Variable k kann dabei die Werte -4, -3, ..., +4 annehmen. Der jeweilige Wert ist zeitabhängig und durch die Ansteuerung der Schalter, also das Pulsmuster für den Betrieb der gesamten Stelleranordnung gegeben. Entsprechend kann Us(t) aus dem Wert Ug der Gleichspannung und dem Pulsmuster berechnet oder durch Addition der gemessenen Wechselspannungen der Einzel-Steller gebildet werden.

Der Verlauf der Spannung Us(t) ist in FIG 5 dargestellt. Er führt zu einem sinusförmigen Strom im Fahrdraht, der von Oberschwingungen überlagert ist, wie in FIG 6 gezeigt ist. Derartige Pulsmuster liegen

3

auch bei anderen gepulsten Wechselrichtern mit einer eingeprägten Gleichspannung vor, z.B. bei Mehrpunkt-Wechselrichtern.

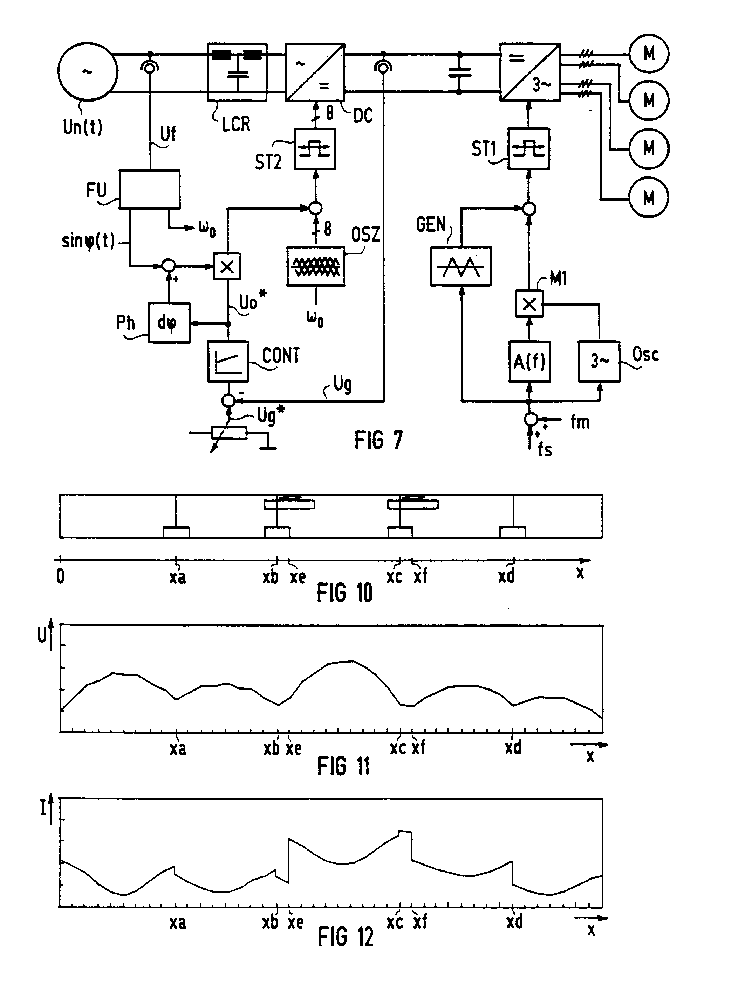

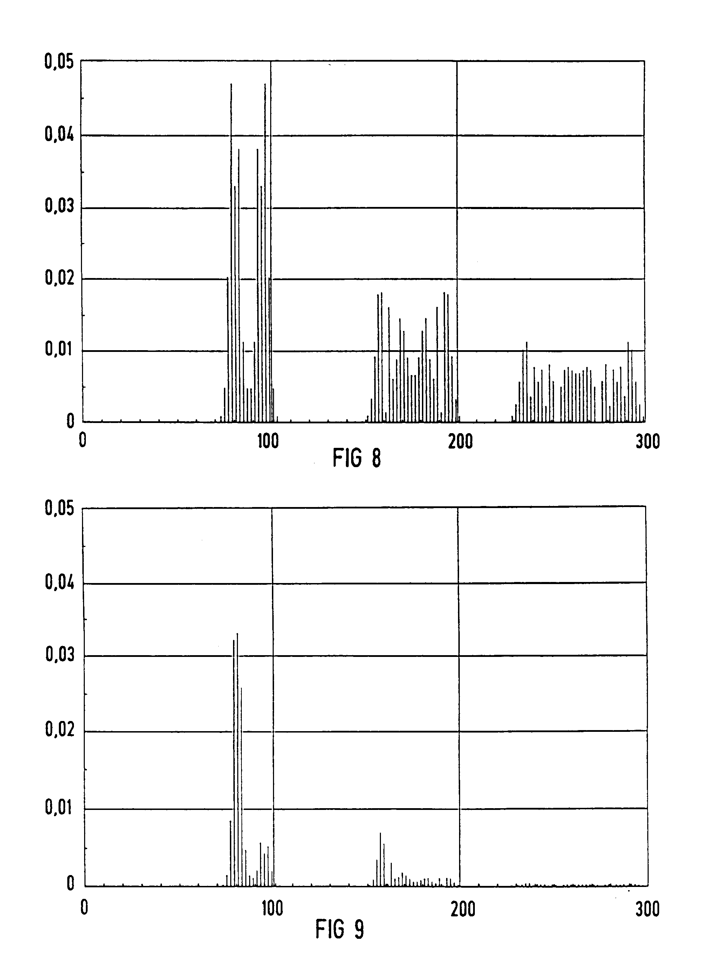

Das Pulsmuster, das der FIG 5 zugrunde liegt, ist bei dieser bekannten Lokomotive durch das "Unterschwingungsverfahren" erzeugt, bei dem ein Sollwert für die Wechselspannung mit einer synchroniserten höherfrequenten Sägezahn-Spannung moduliert wird. FIG 7 zeigt Einzelheiten der Steuerung für die bekannte Lokomotive ("Elektrische Bahnen" 47 (1976), S.18-23).

Dabei wird ein Schlupffrequenz-Sollwert fs proportional zum gewünschten Antriebsmoment vorgegeben, und aus der gemessenen mechanischen Drehzahl fm der Antriebsmotoren die Ständerfrequenz f = fs + fm der Antriebsmotoren gebildet. Ein Kennlinien-Glied A(f) bildet daraus die Amplitude A, die im Multiplizierer M1 mit den Phasensignalen eines mit der Ständerfrequenz f gesteuerten Oszillators multipliziert wird, um daraus die gegeneinander phasenversetzten Sollwerte der drei Phasenspannungen der Antriebsmotoren M zu erhalten. Diese Phasenspannungen werden pulsbreitenmoduliert, indem aus den Schnittpunkten mit einer Sägezahnspannung, die in einem Generator GEN z.B. als Vielfaches der Ständerfrequenz f gebildet wird, in einem Steuersatz ST1 die Zündimpulse für die Ventile des motorseitigen Wechselrichters erzeugt werden.

Die Eingangsgleichspannung Ug dieses motorseitigen Wechselrichters wird durch die Steuerung des z.B. als Gleichrichter betriebenen einphasigen Pulswechselrichters DC über einen Spannungsregler CONT auf einem vorgegebenen Sollwert Ug* gehalten. Dazu wird am Netz (d.h. am Fahrdraht FS der FIG 3) die Netzspannung Un(t) abgegriffen, aus der in einer Filteranordnung FU die Frequenz $\omega_o$ und der Phasenwinkel $\phi(t) = \omega_o.t$ der Grundschwingung gebildet wird. Eine Frequenzverschiebung, die von Filteranordnung und anderen Bauelementen hervorgerufen wird, kann durch einen entsprechenden Phasendifferenz-Sollwert d$\phi$, der in Abhängigkeit von den am Spannungsregler abgegriffenen Amplituden-Sollwert $U_O^*$ der Spannungs-grundschwingung in einem Kennlinienglied Ph gebildet wird, kompensiert werden. Der Multiplizierer M2 bildet entsprechend dem korrigierten Phasenwinkel $\phi(t)$ + d$\phi$ einen Sollwert U(t)* = $U_O^*.\sin (\phi(t)+d\phi)$ für die Spannungsgrundschwingung des Wechselrichters DC.

Dieser Sollwert U*(t) wird zur Steuerung des Pulswechselrichters DC verwendet.

Dazu werden vier auf die Frequenz $\omega_o$ abgestimmte, höherfrequente Sägezahnspannungen in einem Oszillator OSZ gebildet, die jeweils einem Einzel-Wechselrichter der FIG 3 zugeordnet sind.

Ein Steuersatz ST2 bildet aus den Schnittpunkten des Sollwertes U*(t) mit einer Sägezahnkurve bzw. der invertierten Sägezahnkurve die Schaltzeitpunkte zum Betätigen des Umschalters SA bzw. SB (FIG 1) des zugeordneten Einzel-Wechselrichters.

Aufgabe des Oberschwingungsfilters LCR ist, das Netz und andere, daran angeschlossene Geräte von Oberschwingungen zu entlasten, und gleichzeitig auch den eigenen Stromrichter vor Oberschwingungen, die im Netz wegen der anderen Geräte vorhanden sein können, zu schützen. Für die Stellerersatzspannung Us(t) zeigt FIG 8 das Oberschwingungsspektrum, das durch Fourieranalyse aus FIG 5 entsteht, und FIG 9 das entsprechende Spektrum der Spannung Un(t) am netzseitigen Filteranschluß, d.h. am Fahrdraht.

Daraus wird deutlich, daß bei leistungsstarken Stromrichtern das speisende Netz nicht als derart starr angesehen werden kann, daß alle Oberschwingungen bereits vom Filter aufgenommen werden und die Netzspannung nicht mehr beeinflussen. Wie z.B. aus der Praxis bei Hochspannungsgleichstromübertragungen oder bei Bahnnetzen bekannt ist, vermögen derartige Rest-Oberschwingungen, wie sie in FIG 9 dargestellt sind, das Netz noch derart zu belasten, daß empfindliche Geräte gestört werden, vor allem datenverarbeitende Steuergeräte, Sicherheitseinrichtungen, Fernmelde- und Signalanlagen, die am oder in der Nähe des Netzes installiert sind. Derartige Probleme treten nicht nur beim Betrieb von Gleichrichtern an Wechselspannungsnetzen, sondern z.B. auch bei Gleichstromstellern an Gleichspannungsnetzen auf.

So ist z.B. in der deutschen Offenlegungsschrift 29 44 334 vorgesphlagen, im netzgespeisten Gleichstromsteller eines U-Bahn-Triebwagens von einer Stellerfrequenz auf eine andere Stellerfrequenz umzuschalten, wenn die vom Steller und dem nachfolgenden maschinenseitigen Wechselrichter des Triebwagens ins U-Bahn-Gleichstromnetz rückgespeiste Störspannung in einen Frequenzbereich gerät, der für die Sicherheitsanlagen der U-Bahn kritisch ist.

Es handelt sich also bei dieser Umschalteinrichtung um eine besonders einfache Art eines "Optimierungsrechners", der aus vorgegebenen, kritischen Frequenzbereichen derartige Steuersignale für den Steller abgibt, daß diese kritischen Frequenzen im Netz nicht angeregt werden. Als Optimierungskriterium dient in diesem Fall die minimale Anregung der kritischen Frequenzen, auf die das Netz und im Netzbereich installierte Geräte besonders empfindlich ist.

Es ist üblich, die Empfindlichkeit auf Oberschwingungen durch eine Empfindlichkeitsfunktion, den sogenannten "psophometrischen Faktor", zu beschreiben. Der ins Netz rückgespeiste Oberschwingungsstrom des Stromrichters wird dann mit diesem Faktor gewichtet (psophometric weighting), um nachfolgend eine Auswertung zwischen kritischen und unkritischen Oberschwingungen durchführen zu können und geeignete, unkritische Pulsmuster auszuwählen.

Diesen durch diese Bewertung erhaltenen "psophometrischen Störstrom" z.B. im Stromabnehmer einer Lokomotive als Maß für die Störbeeinflussung durch den Stromrichter heranzuziehen, ist zwar üblich, jedoch unzureichend. Für die Störbeeinflussung tatsächlich maßgebend ist nämlich nicht der vom Stromrichter selbst eingespeiste Oberschwingungsstrom, bei einer Lokomotive also der Strom im Stromabnehmer, sondern der im Netz selbst auftretende Oberschwingungsstrom, d.h. der Strom im Fahrdraht. Außerdem ist nicht der Oberschwingungsstrom des Netzes am Ort seiner Einspeisung maßgebend, wo er im Fall eines Triebfahrzeuges schon aus praktischen Gründen nicht meßbar ist, sondern dieser Netz-Oberschwingungsstrom müßte an allen den Orten, an denen kritische Geräte vorhanden sind, gemessen und dem Stromrichter zur Bestimmung des optimalen Pulsmusters gemeldet werden. Die vom Stromrichter angeregten Oberschwingungen breiten sich im Netz nämlich entsprechend der jeweiligen Konfiguration des Netzes und der anderen, daran angeschlossenen Verbraucher als und können an den verschiedenen Orten des Netzes zu ganz unterschiedlichen Resonanzerscheinungen führen. Daher wären häufig wesentlich größere Oberschwingungsströme am netzseitigen Stromrichteranschluß zulässig, falls in deren Spektrum die jeweils resonanzanregenden Komponenten fehlen würden. Umgekehrt kann ein vom Stromrichter eingespeister, relativ niedriger Oberschwingungsstrom in bestimmten Netzteilen zu erheblichen Stromresonanzen und Stromüberhöhungen führen.

Ist die Konfiguration des Netzes hinreichend genau bekannt, so kann dessen Verhalten durch Systeme partieller Differentialgleichungen beschrieben werden, wie dies z.B. von J.Holtz und H.-J.Klein beschrieben ist ("The propagation of harmonic currents generated by inverter-fed locomotives in the distributed overhead supply system" European Conference on Power Electronics and Applications, EPE Grenoble (1987), Seite 1239 - 1244).

FIG 10 zeigt eine Konfiguration, bei der an den Orten xa, xb, xc und xd entsprechende Unterwerke in einen Fahrdraht einspeisen und sich an den Orten xe und xf Triebfahrzeuge befinden, die über ihre Stromabnehmer an den Fahrdraht angeschlossen sind. Die Figuren 11 und 12 zeigen den Effektivwert der Oberschwingungen von Spannung und Strom längs des Fahrdrahtes.

Aus FIG 11 erkennt man, daß die von den Lokomotiven in den Fahrdraht eingespeiste Störspannung zu einem Störstrom führt, der sich über den Fahrdraht ausbreitet und nur teilweise über die nächste Anschlußstelle (Lokomotive oder Unterwerk) abfließt. Für die von diesem Teil des Störstromes angeregten Frequenzen wirken also die anderen Stromrichter des Netzes bereits als Dämpfung, was einen niedrigen Wechselstromwiderstand (Impedanz) des Netzes für den eingespeisten Störstrom dieser Frequenz bedeutet.

Ein Teil des Störstromes breitet sich aber über das ganze Netz aus und regt Strom und Spannung zu stehenden Wellen an, die nur von dem längs des ganzen Netzes verteilten Widerstand des Fahrdrahtes gedämpft werden können. Im Resonanzfall kann das Netz nicht mehr Energie aufnehmen, als im Fahrdraht selbst verbraucht wird, das Netz besitzt daher für diese Frequenzen ein Maximum der Impedanz.

Eine Reihenschaltung aus einem Widerstand R, einer Induktivität L und einer Kapazität C besitzt die Impedanz

$$Z = \sqrt{R^2 + (\omega L - 1/\omega C)^2}$$

die bei der Frequenz

$$\omega_i = \sqrt{\frac{1}{LC} - \frac{R^2}{4L^2}}$$

ein Minimum besitzt. Frequenzen, für die das Netz sich wie ein Reihenschwingkreis verhält, sind also für die Ausbreitung stehender Wellen unkritisch. Werden jedoch Induktivität und Kapazität parallel geschaltet, so besitzt die Impedanz für diese Frequenz ein Maximum ("Parallelschwingkreis"). Ein derartiges Verhalten des Netzes ist kritisch.

Die Ausbildung stehender Wellen und deren Frequenzen sind sowohl von der räumlichen Konfiguration des Netzes, insbesondere also auch dem Ort der jeweiligen Stromrichter, wie auch von den Betriebszuständen der Stromrichter selbst abhängig. Da sich diese Parameter aber zeitlich ständig verändern können, kann man von vornherein keine bestimmte, zeitlich konstante Frequenz angeben, auf deren Unterdrückung das Pulsmuster eines Stromrichters ausgelegt werden müßte, um Resonanzen im Netz auszuschließen.

Kommt es infolge der Resonanzanregung zu lokalen Spannungsüberhöhungen, so müssen auch für Geräte, die keinen Frequenzbereich besitzen, in dem sie besonders oberschwingungsgefährdet sind, Störungen erwartet werden. Daß dies auftreten kann, ergibt sich aus Spannungsüberschlägen, die an elektrischen Einrichtungen im Bereich von Bahnnetzen bereits beim Betrieb von Triebfahrzeugen mit Pulsstromrichtern ohne vorgeschaltete Oberschwingungsfilter beobachtet worden sind. Durch die Installation eines entsprechendes Oberschwingungsfilters kann sich aber das Gewicht einer Lokomotive um nahezu eine Tonne erhöhen, was wiederum ungünstige Auswirkungen auf die räumliche und mechanische Konstruktion der Lokomotive hat.

Ferner ist es wünschenswert, daß auch Oberschwingungen niedriger Ordnungszahl nur schwach angeregt werden, da diese von einem Oberschwingungsfilter nicht gedämpft werden können. Derartige niederfrequente Oberschwingungen treten aber auch bei festen Impulsmustern, die an sich nur höhere Oberfrequenzen enthalten, immer dann auf, wenn in der Steuerung der Stromrichter Unsymmetrien vorliegen. Ferner kann es beim Betrieb von Fahrzeugen vorkommen, daß nur ein Drehgestell angetrieben und dann das eigene Oberschwingungsfilter abgeschaltet werden muß, um eine Überlastung zu vermeiden.

Aus FIG 11 erkennt man, daß selbst in entfernteren Netzabschnitten noch erhebliche Resonanzströme aufteten können. Befinden sich mehrere Triebfahrzeuge in einem gleichen oder benachbarten Netzabschnitt, so kommt es zu einer gegenseitigen Beeinflussung, bei der zwischen den beteiligten Fahrzeugen hohe Störströme ausgetauscht werden.

Diese Nachteile erzeugen den Wunsch, den Stromrichter so zu steuern, daß die Spektralkomponenten der von ihm in das ausgedehnte Versorgungsnetz eingespeisten Oberschwingungsströme nicht mit den Eigenfrequenzen des Netzes zusammenfallen. Dadurch kann erreicht werden, daß die Gefährdung von Anlagenteilen des Netzes durch Resonanzüberspannungen vermieden, die Störung von Signal- und Fernmeldesystemen im Netzbereich vermindert, die gegenseitige Beeinflussung von mehreren am gleichen Netz betriebenen Stromrichtern verhindert und die Baugroße von Oberschwingungsfiltern im Hochspannungsteil der Stromrichter verringert bzw. ein derartiges Filter überflüssig gemacht wird.

Um dies zu erreichen, könnten an sich die an das Netz angeschlossenen Ventile des Stromrichters nach einem Optimierungsverfahren gesteuert werden. Die für die Optimierung erforderliche Zielfunktion ist jedoch von der jeweiligen aktuellen Konfiguration des Netzes und der daran angeschlossenen Verbraucher abhängig und ändert sich ständig. Daher sind die erwähnten off-line-Verfahren der Optimierung nicht anwendbar.

Vielmehr ist eine Optimierung erforderlich, die an momentannen Resonanzeigenschaften des tatsächlichen Netzes angepaßt ist.

Der Erfindung liegt die Aufgabe zugrunde, den Betrieb eines Stromrichters, der dem angeschlossenen Netz Strompulse oder insbesondere Spannungspulse einprägt, optimal an den momentanen, jeweils vorliegenden Betriebszustand anzupassen.

Dadurch können auch Resonanzerscheinungen, die sich im Netz als stehende Wellen ausbreiten, selbst dann weitgehend vermieden werden, wenn die Resonanzfrequenzen des Netzes unbekannt sind oder sich zeitlich verändern. Zeitliche veränderliche Resonanzfrequenzen liegen bei nicht-konstanten Lasten vor, wobei insbesondere der Stromrichter selbst eine derart verändliche Last sein kann. Für eine mobile Anordnung des Stromrichters auf einer Lokomotive ist dieses Problem oben bereits ausführlich erläutert worden.

Die Erfindung geht zur Lösung der Aufgabe davon aus, daß beim optimalen Zustand des Netzes auch für Strom und Spannung in der Zuleitung zwischen Netz und Stromrichter Bedingungen herrschen, die mathematisch formulierbar sind und durch den Betrieb des Stromrichters möglichst wenig gestört werden sollen.

Gemäß einem der unabhängigen Ansprüche (Anspruch 1) sieht die Erfindung vor, daß die Schaltelemente des Stromrichters zu Umschaltzeitpunkten betätigt werden, die zunächst durch Startwerte entsprechender Schaltwinkel vorgegeben werden. Zur Optimierung des Netzzustandes wird während einer ganzen Periode dieses Startbetriebes fortlaufend die Spannung Un(t) des Netzes oder der ins Netz fließende Strom In(t) (allgemeiner: eine in der Zuleitung auftretende elektrische Größe An(t)) gemessen und durch Fourier-Transformation werden deren aktuelle Fourier-Koeffizienten $\underline{A}n(k.\omega_o)$ gebildet. Soll diese Größe rein sinusförmig sein, so stellt z.B. der Effektivwert

$$\sqrt{\sum_{k=2}^{\infty} |\underline{A}n(k \cdot \omega_o)|^2}$$

der auf die Netzfrequenz $\omega_o$ bezogenen Oberschwingungen eine Zielfunktion dar, die im Idealzustand den Wert Null hat. Da bei der Pulsung des Stromrichters unvermeidliche Oberschwingungen entstehen, kann für diese Zielfunktion nur gefordert werden, daß ihr Wert beim optimalen Betrieb des Stromrichters ein Minimum aufweist.

Man kann daher die Schaltwinkel variieren, bis eine Zielfunktion, die die aus den Fourier-Koeffizienten $Un(k.\omega_o)$ bestimmte mittlere Oberschwingungsamplitude erfaßt, nicht mehr abnimmt. Dabei werden Schaltzeitpunkte gefunden, bei denen zwar die unvermeidlichen Störströme und Störspannungen zugelassen sind, deren Frequenzen aber in Bereiche verschoben sind, bei denen z.B. die Netzspannung nur minimal verzerrt ist. Dies sind optimierte Schaltwinkel, die dann die Umschaltzeitpunkte der Schaltelemente beim weiteren Stromrichterbetrieb bestimmen.

Eine allgemeine Zielfunktion kann durch

$$A_{ab} = \sqrt{\sum_{k=0} G_w(k \cdot \omega_o) \cdot |\underline{A}_{ab}(k \cdot \omega_o)|^2}$$

definiert werden, wobei $\underline{A}_{ab}(k.\omega_o)$ die Fourierkoeffizienten einer Funktion

$$A_{ab}(t) = An(t) - An(t)^*$$

sind, die die Abweichung der gemessenen elektrischen Größe von einer den optimalen Zustand beschreibenden, z.B. durch Sollwerte vorgegebenen Funktion $An(t)^*$ ist. $Gw(k.\omega_o)$ ist eine von der Fourierfrequenz $\omega_o$ abhängige Gewichtsfunktion, die es gestattet, z.B. für bestimmte Ordnungen k durch $Gw(k.\omega_o) \approx O$ hohe Oberschwingungsamplituden zuzulassen (z.B. wenn am Netz nur Verbraucher angeschlossen sind, die diese Oberschwingungen tolerieren) und durch hohe Werte von $Gw(k.\omega_o)$ anderen Oberschwingungen Amplituden und Phasen aufzuzwingen, die durch entsprechende Soll-Fourierkoeffizienten $A_{ab}(k.\omega_o)^*$ der Soll-Funktion vorgebbar sind.

Soll z.B. die Spannung des Netzes eine Sinusform $A^* \cdot \sin(\omega_o.t + \phi^*)$ mit einem Gleichspannungsanteil $A_o^*$ erhalten, so kann

$$An(t)^* = A_o^* + A^* \sin(\omega_o t + \varphi^*)$$

mit den zugehörigen Fourierkoeffizienten

$$\underline{A}n(k \cdot \omega_o) = A_o^* \qquad \text{für } k = o$$

$\underline{A}n(k.\omega_o) = A^*.\exp(j.\phi^*)$ für $k = 1$

vorgegeben werden. Aus den entsprechenden aktuellen Fourierkoeffizienten $\underline{U}n(k.\omega_o)$ der gemessenen Spannung $Un(t)$ ergeben sich dann die Fourierkoeffizienten der Funktion $A_{ab}(t)$:

$$k = 0: \qquad \underline{A}_{ab}(o) = \underline{U}n(o) - A_o^*$$

$k = 1: \underline{A}_{ab}(\omega_o) = \underline{U}n(\omega_o) - A^*. \exp(j.\phi^*)$
$k \geqq 2: \underline{A}_{ab}(k.\omega_o) = \underline{U}n(k.\omega_o)$

und durch entsprechend hohe Gewichtsfaktoren $Gw(o)$ und $Gw(l)$ kann aus den aktuellen Fourierkoeffizienten eine Zielfunktion gebildet werden, die besonders Abweichungen des Gleichanteils und der Grundschwingung berücksichtigt.

7

Ein geeignetes Optimierungskriterium ist dabei, daß der Wert dieser Zielfunktion bei den optimierten Werten der Schaltzeitpunkte ein Minimum annimmt. Aus diesem Kriterium werden somit die Schaltzeitpunkte für den weiteren Betrieb des Stromrichters bestimmt.

Sollen Gleichspannungsanteil und Grundschwingung überhaupt nicht von den Sollwerten abweichen, so können die entsprechenden Fourierkoeffizienten in der Zielfunktion auch übergangen werden und durch entsprechende Nebenbedingungen $Aab(o) = \underline{A}ab(\omega_o) = O$ ersetzt werden.

Da die aktuellen Fourierkoeffizienten $\underline{A}n(k.\omega_o)$ von den Umschaltzeitpunkten zum Betätigen der Stromrichter-Schaltelemente abhängen, ist Aab eine skalare Funktion der Schaltzeitpunkte. Diese nimmt ein Minimum an bei den Nullstellen ihres Gradienten. Andere geeignete Zielfunktionen sind daher durch

grad Aab bzw. grad(Aab$^2$)

gegeben und das Optimierungskriterium ist bei den Nullstellen dieser Zielfunktionen erfüllt.

Wird bei der Zielfunktion von der Abweichung des ins Netz fließenden Stromes In(t) von einem Sollwert An(t)* ausgegangen, d.h. An(t) = In(t) in den bisherigen Beziehungen angesetzt, so wird dadurch nur der ins Netz fließende Strom In(t) optimiert, während z.B. im erwähnten Fall der Parallelresonanzzustände im Netz selbst schwache eingespeiste Oberschwingungen erhebliche Resonanzströme im Netz anregen. Denn im Bereich der Resonanzfrequenzen hat das Netz einen hohen Innenwiderstand, da diese Eigenschwingungen im Netz kaum gedämpft sind. Daher ist nur eine geringe Stromaufnahme nötig, um erhebliche Eigenschwingungen aufrechtzuerhalten. Um Resonanzen zu dämpfen, müssen diese Frequenzen in der Zuleitung zum Netz also stärker gedämpft werden als andere Frequenzen, insbesondere wesentlich stärker als die Frequenzen, bei denen der Netzwiderstand minimal ist. Es ist daher vorteilhaft, bei der Bildung der Zielfunktion die entsprechenden Fourier-Koeffizienten mit einer Funktion zu gewichten, die die momentane Impedanz des Netzes berücksichtigt. Für die Oberschwingungen kann aber die momentane Impedanzfunktion des Netzes

$$\underline{Z}n(k.\omega O) = \underline{U}n(k.\omega O)/In(k.\omega O)$$

zumindest hinsichtlich ihres Betrages, vorteilhaft aber als komplexe Zahl auch hinsichtlich ihres Phasenwinkels gemessen werden. Dies ist in der gleichzeitig eingereichten Patentanmeldung "Verfahren und Vorrichtung zur Erfassung von Resonanzmeßgrößen eines an einem Stromrichter angeschlossenen Netzes" des gleichen Anmelders beschrieben.

Setzt man daher für die aktuellen Spannungs-Istwerte an:

$$\underline{Z}n(k.\omega_o) \cdot \underline{I}n(k.\omega_o) = \underline{U}n(k.\omega_o)$$

und für die entsprechenden Sollwerte

$$\underline{Z}n(k.\omega_o) \cdot \underline{I}n(k.\omega_o)^* = \underline{U}n(k.\omega_o)^*,$$

so kann praktisch die Abweichung

$$Aab(t) = Un(t) - Un(t)^*$$

durch die Zielfunktion

$$A_{ab} = \sqrt{\sum_{k=0} Zn(k.\omega_0)^2 \, |\underline{I}n(k.\omega_0) - \underline{I}n(k.\omega_0)^*|^2}$$

$$= \sqrt{\sum_{k=0} |\underline{U}n(k.\omega_0) - \underline{U}n(k.\omega_0)^*|^2}$$

$$= \sqrt{\sum_{k=0} |\underline{Z}n(k.\omega_0) \cdot \underline{I}n(k.\omega_0) - \underline{U}n(k.\omega_0)^*|^2}$$

optimiert werden. Im folgenden soll also stets für die am Abgriff des Netzes gemessene elektrische Größe A(t) und deren Fourier-Koeffizienten $An(k.\omega_o)$ die Netzspannung Un(t) bzw. die aktuellen Koeffizienten $\underline{U}n$-

8

(k.$\omega_o$) gesetzt werden. Die Sollwerte $\underline{Un}(k.\omega_o)^*$ können dabei aus Strom-Sollwerten für $\underline{In}(k.\omega_o)^*$ bestimmt oder direkt durch Spannungssollwerte, z.B.

$$Un(t)^* = A_o^* + A_1^*(\sin \omega_o t + \varphi^*)$$

vorgegeben werden, die den Gleichspannungsanteil sowie über Amplitude $A_1^*$ und Phasenlage $\phi^*$ den Wirk- und Blindanteil des eingespeisten Stromes vorzugeben gestatten.

Bei diesem Ansatz werden also Stromoberschwingungen $In(k.\omega_o)$,für die das Netz aufnahmefähig ist (Minima der Netzimpedanz) nur gering gewichtet und gering gedämpft. Bei Maxima der Netzimpedanz, bei denen im Netz eine störende Parallelresonanz angeregt und die Netzspannung verzerrt würde, werden diese Frequenzen hoch gewichtet und stark gedämpft. Andererseits ist $Zn(k.\omega_o)$ auch die Impedanz aller am Abgriff stromrichterseitig angeschlossenen Elemente, also des Stromrichters einschließlich Impedanzelementen wie Transformatoren, Filter und Drosseln. Frequenzen, bei denen diese stromrichterseitige Impedanz gering ist, werden also ebenfalls nur schwach gedämpft.

Im Fall der erwähnten Lokomotive wird durch diese Zielfunktion dem Netz praktisch die durch $Un(t)^*$ vorgegebene Grundschwingung eingeprägt, deren Istwert als Modell-Koeffizient von dem gerichteten aktuellen Koeffizienten $\underline{In}(k.\omega_o)$ abhängt. Für die in $Un(t)^*$ nicht enthaltenen Koeffizienten braucht nur $Zn \cdot \underline{In}$-(k.$\omega_o$) minimiert zu werden, so daß im allgemeinen eine Erfassung des in $\underline{Zn}(k.\omega_o)$ enthaltenen Phasenwinkels nicht erforderlich ist.

Demnach wird nach einem anderen der unabhängigen Ansprüche (Anspruch 15) zumindest zu Beginn eines Optimierungszyklus am Stromabnehmer der Lokomotive (allgemeiner also am Abgriff, der den Stromrichter mit dem Netz verbindet) nicht nur die Spannung $Un(t)$ gemessen und fouriertransformiert, sondern auch die Fourier-Koeffizienten $\underline{In}(k.\omega_o)$ des im Abgriff fließenden Stromes $In(t)$ erfaßt. Die aktuellen Koeffizienten $\underline{In}(k.\omega_o)$ hängen von der Betätigung der Schaltelemente des Stromrichters ab. Daher werden die Schaltzeitpunkte des Stromrichters minimiert, bis die Zielfunktion den gewünschten, optimalen Wert (hier: ein Minimum) annimmt.

Ein von Istwerten $\underline{In}(k.\omega_o)$ des Stromes ausgehendes Verfahren ist vor allem für unmittelbar am Netz angeschlossene stromeinprägende Umrichter vorteilhaft. Meistens ist es aber vorteilhaft, die erwähnten Impedanzelemente im Abgriff zwischen Stromrichter und Netz anzuordnen. Anstelle der Netzimpedanz $\underline{Zn}$-(k.$\omega_o$) braucht aber nur die Übertragungsfunktion zwischen der gepulsten Ausgangsgröße des Stromrichters und einer am Netz auftretenden, von der gepulsten Größe abhängigen Größe erfaßt und optimiert zu werden.

Bei der gepulsten Größe kann es sich also um den Strom $Is(t)$ am Ausgang eines stromeinprägenden Umrichters oder insbesondere die Spannung $Us(t)$ eines spannungseinprägenden Umrichters handeln, bei dem nach einem anderen der unabhängigen Ansprüche (Anspruch 9) zu Beginn eines Optimierungszyklus die aktuelle Übertragungsfunktion

$$\underline{G}(k.\omega_o) = \underline{Un}(k.\omega_o)/\underline{Us}(k.\omega_o)$$

erfaßt wird, die dem Impedanzelement zugeordnet ist. Die Zielfunktion wird dann zu

$$A_{ab} = \sqrt{\sum_{k=0} |\underline{G}(k.\omega_o) \cdot \underline{Us}(k.\omega_o) - \underline{Un}(k.\omega_o)^*|^2} = \sqrt{\sum |A_{ab}(k.\omega_o)|^2}$$

Für $k \leqq 1$ können dabei die Koeffizienten $G(o)$ und $\underline{G}(\omega_o)$ durch eigene Überlegungen bestimmt werden.

Soll für die durch $\underline{Un}(k.\omega_o)^*$ gegebene Soll-Netzspannung $Un(t)^*$ die Abweichung der Ist-Spannung $Un(t)$ minimal werden, so ist für $Us(t)$ eine Soll-Ausgangsspannung $A^*(t)$ vorzugeben, für die gilt

$$A^*(t) - Un(t)^* = \Delta U^*(t)$$
$$= \Delta U(t) = Us(t) - Un(t)$$

wobei $\Delta U(t)$ und $\Delta U(t)^*$ den Istwert und Sollwert des Spannungsabfalls am Impedanzelement beschreibt. Für $\underline{U}n(k.\omega_o) = \underline{G}(k.\omega_o) . \underline{U}s(k.\omega_o)$ ergibt sich daraus:

$$\underline{G}(k.\omega_o) . \underline{U}s(k.\omega_o) - \underline{U}n(k.\omega_o)^* = \underline{U}s(k.\omega_o) - \underline{A}^*(k.\omega_o).$$

Wird also für die Netzspannung ein rein sinusförmiger Verlauf gewünscht (d.h. $Un(k.\omega_o)^*$ enthält nur den Soll-Fourier-Koeffizienten $Un(\omega_o)$ für die Grundschwingung), so folgt daraus für den Soll-Koeffizienten $\underline{A}^*(\omega_o)$ $= A^*.exp(j.\phi^*_o)$ der Ausgangsspannung $Us(t) = Us.exp(j.(\omega_o.t + \phi))$ des Stromrichters:

$$\underline{G}(\omega_o) . \underline{U}s(\omega_o) - \underline{U}n(k.\omega_o) = \underline{G}(\omega_o) . Us.e^{j\varphi}$$

$$= (Us.e^{j\varphi} - A^* e^{j\varphi})^*.$$

Für die Fourierkoeffizienten $\underline{A}ab(k.\omega_o) = V_k + j.W_k$ und $\underline{U}s(k.\omega_o) = a_k + j.b_k$ ergeben sich daher in der Zielfunktion folgende Zusammenhänge:

$k = 0$: $W_o = G(o). b_o$
$k = 1$: $V_I = a_I - A^* . \cos \phi^*$; $W_I = b_I - A^* . \sin \phi^*$
$k \geq 2$: $V_k = G(k.\omega_o) . ak$; $W_k = G(k.\omega_o) . b_k$

Dabei sind $G(o)$ und $G(k.\omega_o)$ jeweils die ohmschen Spannungsabfälle, die für den vom Stromrichter gelieferten Gleichstrom bzw. die Stromoberwelle am Impedanzelement auftreten und deren jeweils aktueller Wert erfaßt wird.

Diese als Gewichte in der Zielfunktion $Aab$ auftretenden Koeffizienten bleiben unverändert, während die Koeffizienten $a_k$ und $b_k$ sich aus den Schaltzeitpunkten ergeben.

Daher werden aus der Bedingung, daß die Zielfunktion im optimierten Zustand einen optimalen Wert (insbesondere ein Minimum für $Aab$ bzw. den Wert Null für $gradAab$) annimmt, optimierte Schaltzeitpunkte ermittelt, zu denen dann die Schaltelemente betätigt werden.

Man erkennt daraus, daß - im Gegensatz zur Bewertung des Störstromes nach einem psophometrischen Faktor - wesentlich höhere Störströme für die Bereiche zugelassen werden, in denen die momentane Impedanz des Netzes gering ist.

Gemäß der Erfindung werden für die Schaltzeitpunkte $t_i$ also Werte gefunden, bei denen die Verzerrung des Netzes geringer ist als bei anderen Werten der Schaltzeitpunkte. Werden die Schaltelemente des Stromrichters aber innerhalb einer Periode nur selten betätigt, so treten selbst bei Optimierung der Schaltzeitpunkte noch hohe Verzerrungen auf, die nur durch häufigeres Schalten weiter herabgesetzt werden können.

Wie bei höheren Schaltzahlen aus der Zielfunktion die optimierten Schaltzeitpunkte vorteilhaft gefunden werden können, wird jetzt genauer erläutert.

Mathematisch gelangt man z.B. zum Minimum einer Funktion mehrerer Variabler, wenn man von Startwerten ausgeht, durch Verändern der einzelnen Variablen den Gradientenvektor bei diesem Startpunkt bestimmt und dann neue Startwerte vorgibt, die den Ausgangspunkt in Richtung des negativen Gradientenvektors verschieben. Das Minimum der Funktion ist durch die Nullstellen des Gradientenvektors bestimmt; in diesem Zustand wird für jede Variation der Variablen ein größerer Wert der Funktion gefunden.

Für die Zielfunktion $Uab(t_I,...,t_i ,...)$ sind also die Schaltzeitpunkte $t_i$ die mathematischen Variablen. Das Optimierungskriterium ist dann durch

$$\text{Grad } Uab(t_i) = O$$

gegeben, das mathematisch gleichwertig ist mit dem Kriterium

$$\text{Grad}(Uab(t_i))^2 = O.$$

Ein empirisches Verfahren, bei dem nach einer "trial and error"-Methode das Minimum der Zielfunktion gefunden wird, ist bei niedrigen Schaltzahlen noch durchführbar.

Für eine größere Zahl der Variablen $t_i$ ist aber das empirische Bestimmen des Gradientenvektors und seiner Nullstellen nicht mehr durchführbar.

Andererseits ist aber durch die erläuterte Gewichtung mit der gemessenen Übertragungsfunktion G-(k.ωO) die Zielfunktion bereits auf die Koeffizienten As(k.ωO) zurückgeführt, die den Einfluß der Umschaltzeitpunkte enthalten.

Diese Umschaltzeitpunkte bestimmen aber die Flanken der gepulsten Ausgangsgröße des Stromrichters, und können daher bei Kenntnis der Bauteile-Parameter des Stromrichters und seiner Speisespannung berechnet werden. Man kann daher die tatsächliche gepulste Ausgangsgröße des Stromrichters (also z.B. Is(t) eines stromeinprägenden Pulsstromrichters oder die bevorzugt betrachtete Anschlußspannung Us(t) eines spannungseinprägenden Stromrichters) durch eine virtuelle Ausgangsgröße ersetzen, die für ein mathematisches Modell des Stromrichters aus virtuellen Schaltzeitpunkten berechnet ist. In der Zielfunktion können dann Realteil und Imaginärteil der komplexen Fourier-Koeffizienten $\underline{U}s(k.ωO)$ ersetzt werden durch

$a_k(ti) \cdot F_k(ti)$

$$b_k(ti) \cdot F'_k(ti),$$

wobei $a_k(ti)$ und $b_k(ti)$ Funktionen der virtuellen Umschaltzeitpunkte ti sind, die aus rein geometrischen Überlegungen, nämlich der Fourier-Transformation einer normierten Pulsfolge mit Flanken zu den Zeitpunkten ti, folgen und sich als Winkelfunktionen von $t_i$ ergeben. $F_k(ti)$ und $F'_k(ti)$ dagegen sind Funktionen, die berücksichtigen, daß die Flanken der tatsächlichen Impulsfolge und deren Amplitude noch durch die Schaltung des Stromrichters, insbesondere dessen Kapazitäten und Induktivitäten, die beim Kommutieren wirksam werden, verfälscht sind.

Ersetzt man also die Fourier-Koeffizienten der tatsächlichen, gepulsten Ausgangsgröße durch die entsprechenden Modell-Fourier-Koeffizienten, so wird die Zielfunktion zu einer rein mathematischen Funktion, deren Variablen zwar den tatsächlichen Umschaltzeitpunkten zugeordnet sind, aber nunmehr rein mathematisch variiert werden können, um den optimalen Wert der Zielfunktion zu finden. Es brauchen also nicht die tatsächlichen Schaltzeitpunkte variiert zu werden, vielmehr wird eine Funktion mathematischer Variabler mit mathematischen Methoden untersucht. Während der Rechenzeit, die Jeweils zu der Ermittlung optimierter Werte dieser "virtuellen" Schaltzeitpunkte erforderlich ist, wird der Stromrichter mit den zuletzt errechneten Werten betrieben, die jeweils am Ausgang einer entsprechenden Recheneinrichtung bis zur Ermittlung eines neuen Satzes optimierter Werte zwischengespeichert werden.

Dabei ist zunächst erforderlich, den tatsächlichen Schaltzeitpunkten Anfangswerte vorzugeben, um in diesem Anfangszustand die Fourier-Koeffizienten Un(k.ωO) und gegebenenfalls die Übertragungsfunktion G-(k.ωO) zu ermitteln. Diese Fourier-Koeffizienten werden für die Optimierung im mathematischen Modell benötigt.

Für die Berechnung der optimierten Werte der virtuellen Schaltzeitpunkte können verschiedene mathematische Methoden angewendet werden. Am einfachsten wird auch hierbei von Startwerten ausgegangen, die einen Startwert der Zielfunktion festlegen und das Auffinden des Optimums nach der erwähnten Gradientenmethode ermöglichen. Dabei können diese Startwerte der virtuellen Schaltzeitpunkte mit den Startwerten übereinstimmen, die die Schaltzeitpunkte des parallellaufenden Stromrichters bestimmen. Bei jedem neuen Rechenzyklus werden also dann die jeweils im vorangegangenen Zyklus errechneten optimierten Werte zum Ausgangspunkt einer neuen Optimierung gemacht. Es kann aber auch erforderlich werden, neue Startwerte für einen Zyklus vorzugeben. Dies kann insbesondere dann auftreten, wenn bei den zuletzt optimierten Werten eine "Impulsdurchdringung" auftritt, d.h. wenn das optimale Ende eines Pulses nach dem optimalen Start eines neuen Pulses liegen würde. Derartige irreguläre Werte werden bei der Optimierung dadurch ausgeschlossen, daß für jeden Schaltzeitpunkt ein Variationsintervall vorgegeben wird, das nicht überschritten werden darf. Bei der nächsten Optimierung können aber dann die beiden, sich irregulär überlappenden Pulse zusammengelegt werden, d.h. die Zahl der Variablen wird um 2 verringert. Umgekehrt kann es erforderlich sein, die Zahl der Variablen zu erhöhen, wenn der Wert der Zielfunktion auch im optimierten Zustand einen vorgegebenen Grenzwert überschreitet.

Vorteilhafte Weiterbildungen der bereits erläuterten Verfahrensvarianten nach den Ansprüchen 1, 5, und 9 sind in den Unteransprüchen angegeben. Entsprechende Vorrichtungen enthalten die Merkmale der Ansprüche 13 und 17.

Anhand von einem Ausführungsbeispiel und 22 Figuren wird die Erfindung näher erläutert. Es zeigen:

FIG 1 und 2        einen bereits erläuterten Vierquadranten-Steller und seine Anschlußspannung Un(t) als erstes Beispiel eines Stromrichters,

FIG 3 und 4      den bereits beschriebenen Leistungsteil eines Lokomotiven-Antriebs als bevorzugtes Beispiel eines Stromrichters und dessen Ersatzschaltbild,

FIG 5 und 6      den bereits erläuterten Verlauf der Stromrichter-Anschlußspannung und des dabei auftretenden Oberschwingungsstroms,

FIG 7      die bekannte Steuerung des Stromrichters,

FIG 8 und 9      das Fourier-Spektrum der Spannung in FIG 5 und der dabei auftretenden Fahrdrahtspannung,

FIG 10 bis 12      eine Fahrstrecke der in FIG 3 beschriebenen Lokomotive und die örtliche Amplitude der dabei auftretenden Oberwellen von Spannung und Strom,

FIG 13      ein Ersatzschaltbild des Stromrichters und des Netzes mit einem zwischengeschalteten Impedanzelement,

FIG 14      eine vorteilhafte Vorrichtung zur Durchführung der Erfindung,

FIG 15 und 16      jeweils einen durch Fourierkoeffizienten beschriebenen unstetigen Spannungsverlauf,

FIG 17      ein Programm für den Rechenteil VAR zur virtuellen Variation der Zielfunktion bei der Berechnung der optimierten Schaltzeitpunkte,

FIG 18 und 19      den Verlauf von Strom und Spannung nach der Optimierung im Gegensatz zu FIG 5 und 6,

FIG 20 und 21      das Fourier-Spektrum der Spannungen nach der Optimierung im Gegensatz zu FIG 8 und 9,

FIG 22      die räumliche Verteilung der effektiven Amplitude von Störspannung und Störstrom nach der Optimierung im Gegensatz zu FIG 10 bis 12.

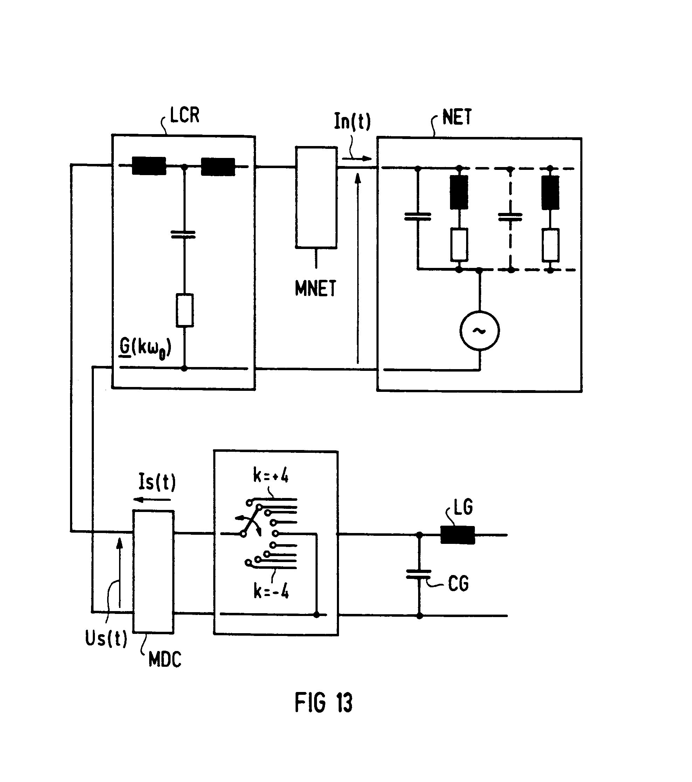

FIG 13 zeigt zunächst ein Ersatzschaltbild, bei dem insbesondere der Stromrichter DC durch ein Modell ersetzt wird, das die gepulste Ausgangsgröße des Stromrichters durch Betätigen eines Stufenschalters erzeugt. Der Stromrichter DC ist von einem Eingangskreis gespeist, der im Fall eines stromeinprägenden Pulswechselrichters in der Regel eine große Gleichstromdrossel LG enthält. Im Fall eines zweistufigen, einphasigen Wechselrichters wirkt diese Drossel als eine Konstantstrom-Quelle, deren Polarität durch die Schalteinrichtungen des Stromrichters umgeschaltet wird. Falls dieser eingeprägte Konstantstrom auch am Eingang kurzgeschlossen werden kann, kann auch ein stromloser Nullzustand am Stromrichterausgang erzeugt werden und durch Hintereinanderschaltung mehrerer derartiger Konstantstromquellen kann ein mehrstufiger Stromrichter entstehen, dessen Ausgangsstrom durch Betätigung der Schalteinrichtungen stufenweise verändert werden kann ("gepulster Strom").

Im Fall des hier bevorzugt betrachteten spannungseinprägenden Pulswechselrichters besitzt der Eingangskreis einen entsprechend groß bemessenen Zwischenkreiskondensator CG, dessen Spannung durch die Schalteinrichtungen auf den Wechselspannungsanschluß des Stromrichters durchgeschaltet werden kann. Der Leistungsteil der in FIG 3 gezeigten Lokomotive stellt ein Beispiel eines mehrstufigen spannungseinprägenden Stromrichters dar, der in diesem Fall aus 4 umpolbaren und ausschaltbaren, in Reihe geschalteten Konstantspannungsquellen besteht.

Die gepulste Ausgangsgröße Us(t) des Stromrichters DC wird dem stromrichterseitigen Ende eines Impedanzelementes LCR, das hier als Oberschwingungsfilter ausgebildet ist, eingeprägt und an dem netzseitigen Ende des Impedanzelementes mißt das Meßglied MNET die dem Netz NET am Abgriff NA eingeprägte Spannung Un(t).

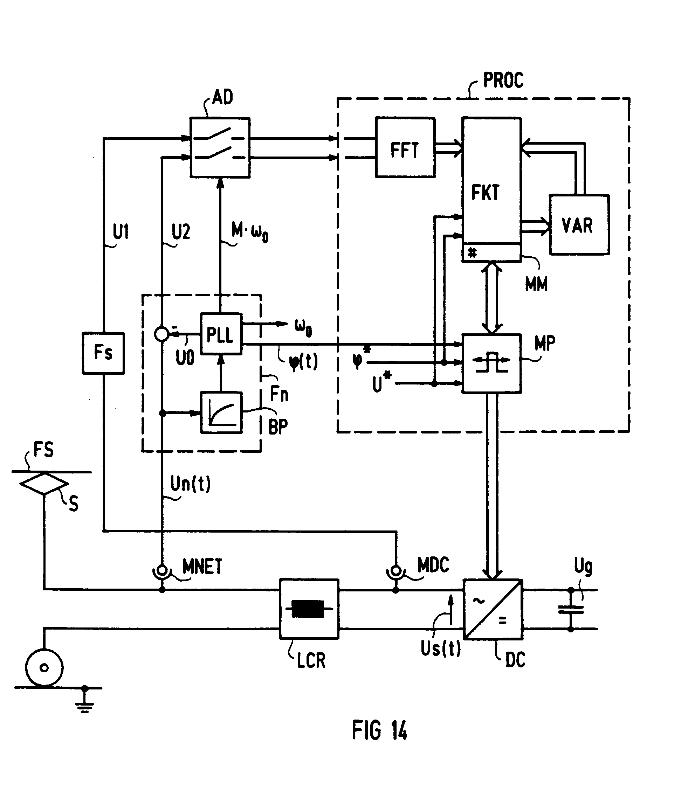

In FIG 14 ist dargestellt, daß die Netzspannung Un(t) über ein Filter Fn geleitet wird, das z.B. aus einem Bandpaß BP und einer phase-locked-loop-Schaltung PLL bestehen kann, um die Amplitude, die Frequenz $\omega O$ sowie die momentane Phasenlage $\phi(t) = \omega O \cdot t$ der Grundschwingung $UO \cdot \sin\phi(t)$ zu ermitteln. Diese Größen werden einer (in FIG 14 nicht dargestellten) Regelung zugeführt, die eine gegenüber dieser Grundschwingung um den Soll-Phasenwinkel $\phi^*$ verschobene Sollspannung mit der Amplitude $U^*$ zu ermittelt. Eine Modulationsstufe MP, die z.B. nach dem eingangs erwähnten "Unterschwingungsverfahren" arbeitet, moduliert diese Sollspannung und liefert die Schaltzeitpunkte ti bzw. die entsprechenden Zündwin-kel $\omega O \cdot ti$, mit denen die Umschalteinrichtungen des Stromrichters DC betätigt werden.

Ferner ist in FIG 14 auch die Meßeinrichtung MDC für die gepulste Ausgangsgröße des Stromrichters dargestellt, obwohl diese im Prinzip entbehrlich ist, da nach der erwähnten Modellvorstellung die Ausgangspulse des Stromrichters auch aus den vorgegebenen Schaltzeitpunkten ti berechnet werden können. Da aber ohnehin häufig für die Regelung der gleichspannungsseitigen Speisespannung Ug des Stromrichters DC eine Messung von Us(t) wünschenswert ist, und außerdem Ungenauigkeiten der im Modell berechneten Ausgangsspannung in die Übertragungsfunktion eingehen würden, kann auch im Rahmen der Erfindung die Ermittlung der tatsächlichen gepulsten Spannung Us(t) weitgehend mittels des Meßgliedes MDC vorgenommen werden.

Außerdem ist im Blockschaltbild des Filters Fn angedeutet, daß aus der Spannung Un(t) durch Subtraktion der Grundschwingung die entsprechende, netzseitige Störspannung U2(t) gebildet wird. Jede Grundschwingungsperiode wird durch eine Abtastfrequenz $M.\omega O$ in jeweils M Abtastintervalle der Länge $\tau$ = $2\pi/M.\omega O$ zerlegt. Die entsprechende Abtasteinrichtung, die als Analog/Digital-Wandler AD arbeitet, liefert also in einer Periode der Grundschwingung insgesamt M-Werte der Störspannung U2(m.$\tau$), wobei zusätzlich ein Filter Fs auch die in Us(t) enthaltene Störspannung U1(t) ausgefiltert, die in entsprechende digitale Werte U1(m.$\tau$) umgesetzt wird.

Zur Durchführung der erfindungsgemäßen Optimierung dient ein Prozessor PROC, der zunächst in einem Rechenteil FFT durch Fast-Fourier-Transformation für jede Oberfrequenz $k.\omega O$ zumindest den Betrag des Quotienten der Fourier-Transformierten der Störspannungen U1(m.$\tau$) und U2(m.$\tau$) liefert. Dadurch sind zumindest für die Oberfrequenzen der Ordnung k = 2,..., M die Fourier-Koeffizienten $G(k.\omega O)$ als Quotienten der entsprechenden fouriertransformierten Störspannungen bestimmt.

Der für die nicht-optimierte Inbetriebnahme der Vorrichtung vorgesehene Impulsbildner MP, der bereits die tatsächlichen Schaltzeitpunkte $t_i$ während des anfänglichen Betriebszustandes vorgibt, liest den Satz der in einer Periode sich ergebenden Umschaltzeitpunkte ti als Startwerte in einen zweiten Rechenteil FKT des Prozessors PROC.

Im Funktionsrechenteil FKT sind Winkelfunktionen gespeichert, die für die Startwerte ti ihrer Variablen einen ersten Satz von Modell-Fourier-Koeffizienten festlegen, aus denen mit den bereits erwähnten Koeffizienten $F_k(k.\omega o)$ und $F_k^{'}(k.\omega o)$ die Modellkoeffizienten für die gepulste Ausgangsgröße Us(t) berechnet werden können. Durch Multiplikation mit den Fourier-Koeffizienten $G(k.\omega O)$ der gemessenen Übertragungsfunktion können daraus entsprechende Modell-Koeffizienten für die netzseitige Spannung Un(t) ermittelt werden, deren mittlere Abweichung dann einen virtuell errechneten Wert für die effektive Störspannung am Netz angibt, also den Wert Uab(ti) der Zielfunktion.

Alle in diesem Anfangszustand auftretenden Modell-Koeffizienten sind dadurch bestimmt, daß für gespeicherte Funktionen von Variablen jeweils die Funktionswerte ausgerechnet werden, die sich bei Einsetzen der gegebenen Startwerte ti ergeben. Im Rahmen der Genauigkeit, mit der diese Funktionen den Zusammenhang zwischen der gepulsten Ausgangsspannung des Stromrichters einerseits und seiner Eingangsspannung Ug und den Umschaltzeitpunkten ti andererseits wiedergeben, ist somit die Spannung Us(t), die Spannung Un(t) und der Wert Uab(ti) auch für den tatsächlich vorliegenden, anfänglichen Betriebszustand bestimmt.

Allerdings ist eine direkte Berechnung dieser Größen im Funktionsteil FKT nur insoweit vorgesehen, als sie für die Berechnung des Gradienten

Grad Uab(ti)

und die nachfolgende virtuelle Variation der Startwerte ti im Variationsrechenteil VAR benötigt sind. Dieser Variationsrechenteil liefert neue Werte für die Variablen der im Funktionsteil gespeicherten Funktionen, d.h. für die virtuellen Schaltzeitpunkte ti, wobei diese variierten Startwerte einem neuen Betriebszustand entsprechen, bei dem sich der Wert der Zielfunktion entsprechend verändert hat. Dieser neue Satz veränderter Startwerte wird im Funktionsrechenteil FKT erneut verarbeitet, bis der Wert der Zielfunktion bei der virtuellen Variation der Schaltzeitpunkte praktisch nicht mehr verringert werden kann. Dadurch ist also jeweils für eine ganze Periode ein optimaler Satz von Schaltzeitpunkten bestimmt, der in einen Zwischenspeicher MM eingeladen wird und von dort direkt vom impulsbildenden Teil MP abgerufen werden kann. Durch Vergleich der entsprechenden Schaltwinkel $\omega O$ . ti mit der Phase $\phi(t)$ wird der jeweilige Impuls zur Betätigung eines Schaltelementes erzeugt.

Werden die erwähnten Rechenteile durch entsprechende Programmierung eines heute handelsüblichen Rechners verwirklicht, so reicht eine Periode der Grundschwingung nicht aus, um jeweils ein ganzes optimiertes Pulsmuster, d.h. für jeden der Schaltzeitpunkte den zugehörigen optimalen Wert, zu berechnen. Der Speicher MM wird also in einem Optimierungszyklus mehrfach hintereinander ausgelesen. Ändert sich während der Rechenzeit der Betriebspunkt des Stromrichters, so ergeben sich grundlegende Verschiebungen im Impulsmuster, so daß die Steuerung hierauf erst nach Abschluß des jeweils laufenden Rechenzyklus reagieren kann. Bei einer Phasenänderung jedoch genügt es, unter Beibehaltung des optimierten Pulsmuster nur jeweils deren Phasenlage beim Winkelvergleich im Teil MP zu ändern.

Im folgenden wird zunächst die Berechnung der Modell-Fourier-Koeffizienten näher erläutert.

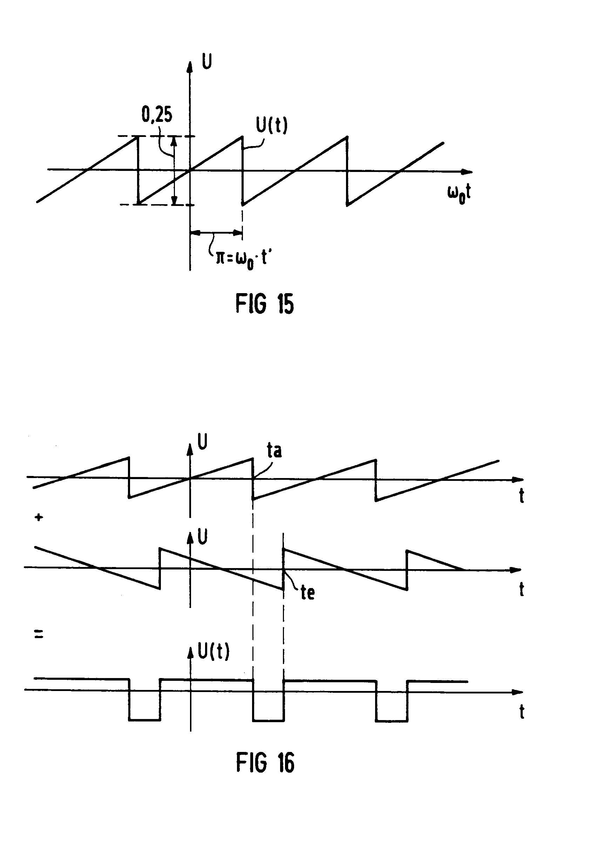

Hierzu zeigt FIG 15 eine Sägezahn-Spannung ohne Gleichspannungsanteil, deren Unstetigkeit bei einem Phasenwinkel $\omega O.t' = \pi$ liegt. Da eine Veränderung des Stufenschalters im Stromrichter DC nach FIG 13 einer Abschaltung oder Zuschaltung einer der vier in Reihe liegenden Konstantspannungsquellen entspricht, ist der in FIG 15 auftretende Spannungssprung auf -0,25 normiert, was also einer Abschaltung entspricht.

Die Fourier-Entwicklung einer solchen Funktion ist

$$u(t) = \frac{1}{2} \left( \frac{\sin \omega_0 \cdot t}{1} - \frac{\sin 2 \cdot \omega_0 \cdot t}{2} + \frac{\sin 3 \cdot \omega_0 \cdot t}{3} - \dots \right)$$

$$= \frac{1}{2} \sum_{k=1} (-1)^{k+1} \cdot \frac{\sin(k \cdot \omega_0 \cdot t)}{k}$$

Handelt es sich um einen Ausschaltsprung zu einem Zeitpunkt ta, der nicht durch $\omega O.ta = \pi$ gegeben ist, so kann aus dem Additionstheorem

$$\sin(x + y) = \sin x.\cos y + \cos x.\sin y$$

unter der Substitution $x = k \cdot \omega O \cdot t$ und $y = k \cdot \omega O \cdot ta$ die entsprechende Fourier-Reihe

$$u(t) = \frac{1}{2\pi} \sum_{k=1} (-1)^{k+1} \frac{\sin(k \cdot \omega_0 \cdot t)\cos(k \cdot \omega_0 \cdot t_a) + (\cos k \cdot \omega_0 \cdot t)\sin(k \cdot \omega_0 \cdot t_a)}{k}$$

angegeben werden. Durch Vergleich mit der üblichen Fourier-Darstellung

$$u(t) = \sum_k \left\{ a_k \cos(k \cdot \omega_0 \cdot t) + b_k \sin(k \cdot \omega_0 \cdot t) \right\}$$

ergeben sich für die Fourier-Koeffizienten $a_k$ und $b_k$ die Werte

$$a_k = \frac{-1}{2\pi} (-1)^k \cdot \frac{\sin(k \cdot \omega_0 \cdot t_a)}{k}$$

$$b_k = \frac{-1}{2\pi} (-1)^k \cdot \frac{\cos(k \cdot \omega_0 \cdot t_a)}{k}$$

Für einen Einschaltimpuls te unterscheiden sich die Koeffizienten nur durch ein Vorzeichen

$$a_k = \frac{1}{2\pi} (-1)^k \cdot \frac{\sin k \cdot \omega_0 \cdot t_e)}{k}$$

$$b_k = \frac{1}{2\pi} (-1)^k \cdot \frac{\cos(k \cdot \omega_0 \cdot t_e)}{k}$$

FIG 16 zeigt, wie durch Addition der sich für jeweils einen Einschaltzeitpunkt und einen Ausschaltzeitpunkt ergebenden Sägezahnspannungen ein gepulster Verlauf entsteht.

Die in FIG 16 gezeigte Pulsfolge hat ebenfalls keinen Gleichanteil. Dagegen ist im realen Stromrichterbetrieb im ausgeschalteten Zustand die Spannung Null vorhanden und die Pulsfolge hat den Gleichanteil

$$b_0 = \frac{1}{T} \int_{t_e}^{t_a} Ug \cdot d\tau = \frac{Ug}{2\pi} (ta - te)$$

$$( Ug = 0{,}25)$$

Führt man eine zusätzliche Funktion vz(ti) ein durch die Bedingung

vz(ti = te) = +l,
vz(ti = ta) = -l,

so wird dadurch die Unterscheidung zwischen einem Einschaltzeitpunkt und einem Ausschaltzeitpunkt erfaßt. Addiert man entsprechend der Gesamtzahl der pro Periode vorzunehmenden Schaltzeitpunkte die entsprechenden Spannungsverläufe der FIG 16, so erhält man folgende Fourier-Koeffizienten:

$$a_0 = 0; \quad b_0 = \frac{1}{8\pi} \sum_i vz(ti) \cdot ti$$

$$a_k = \frac{(-1)^k}{8\pi} \left( \sum_i \frac{vz(ti) \cdot \sin(k \cdot \omega_0 \cdot ti)}{k} \right)$$

$$b_k = \frac{(-1)^k}{8\pi} \left( \sum_i \frac{vz(ti) \cdot \cos(k \cdot \omega_0 \cdot ti)}{k} \right)$$

Hierbei zählt der Summationsindex i alle Ein- und Ausschaltzeitpunkte ti.

Der Vergleich derartiger, theoretisch errechneter Fourier-Koeffizienten mit meßbaren Fourier-Koeffizienten der Stromrichter-Ausgangsspannung hat gezeigt, daß im Spektrum der tatsächlichen Ausgangsspannung bei bestimmten Frequenzen eine Dämpfung auftritt, die durch die Kommutierungsvorgänge im Stromrichter verursacht ist. Derartige Kommutierungen sind die Folge eines Schwingungsvorganges, dessen Frequenz $\omega_{com}$ die Kommutierungszeit und damit auch eine Verzögerung und einen stetigen Anstieg der Pulsflanken zur Folge hat.

Diese zusätzliche Dämpfung kann durch eine Übertragungsfunktion beschrieben werden, die für verschiedene Fälle (Leerlauf und Belastung) bereits berechnet worden ist. Es zeigt sich, daß die Formeln bei einer Belastung zwar sehr kompliziert aufgebaut sind, aber nur unwesentlich von der Übertragungsfunktion im Leerlauf abweichen. Daher kann die Leerlauf-Übertragungsfunktion zumindest näherungsweise benutzt werden, für die sich die Fourier-Koeffizienten

$$F_{com}(\omega) = 1 + \frac{1}{2} \frac{1 + \cos(\pi \cdot k \cdot \omega / \omega_{com})}{(\omega_{com}/k \cdot \omega)^2 - 1}$$

ergeben.

Diese Formeln gestatten also, für die Spannung Us(t) die Modell-Fourier-Koeffizienten

$$|Us(k \cdot \omega 0)| = \sqrt{(a_k^2 + b_k^2)} \cdot F_{com}(k \cdot \omega 0)$$

zu berechnen, die nur eine Funktion aller Schaltzeitpunkte $t_i$ sind. Entsprechend ergeben sich für die Spannung Un(t) die Modell-Fourier-Koeffizienten

$$Un(k \cdot \omega 0) = \sqrt{(a_k^2 + b_k^2)} \cdot G(k \cdot \omega 0) \cdot F_{com}(k \cdot \omega 0).$$

Durch Mittelung über alle Frequenzen der Ordnung k = O bis k = M entsteht die anfangs erläuterte Zielfunktion Uab, die bis auf die Übertragungsfunktion $F_{com}(k \cdot \omega O)$ nur Winkelfunktionen der virtuellen Schaltzeitpunkte und aus der gemessenen Übertragungsfunktion gebildete Gewichtsfaktoren enthält. Es wurde bereits erläutert, wie dabei die Fourierkoeffizienten der Ordnung k = 0 und k = 1 gefunden werden können.

Da die Zielfunktion als mathematische Funktion der Schaltzeitpunkte angegeben werden kann, kann auch auf mathematischem Wege der optimale Wert der Schaltzeitpunkte ermittelt werden, bei denen diese Funktion ihr Minimum hat. Dabei kann z.B. auch die Unterdrückung eines Gleichspannungsanteils und einer Abweichung von der Grundschwingung als Nebenbedingung eingeführt werden.

Vorteilhaft wird das Minimum der Zielfunktion durch virtuelle Variation der Variablen bestimmt, nämlich der Schaltzeitpunkte ti bzw. den zugehörigen Schaltwinkeln $\omega_o$. ti. Die Zahl der Schaltzeitpunkte, z.B. 176 Schaltzeitpunkte pro Periode, ist dabei durch die Zahl der vorgegebenen Startwerte vorgegeben und soll nicht variiert werden.

Im einzelnen ergibt sich also die hier verwendete Zielfunktion

$$Uab = \sqrt{\Sigma\ (Vk^2\ +\ Wk^2)}$$

wobei die Fourier-Koeffizienten Vk und Wk gegeben sind durch

$k = 0$: $W_o = G(o) \cdot b_o$
$k = 1$: $V_l = a_l - A^* \cdot \cos \phi^*$ $W_l = b_l - A^* \cdot \sin \phi^*$
$k \geq 2$: $V_k = a_k \cdot G(k) \cdot F_{com}(k.\omega_o)$ $W_k = b_k \cdot G(k) \cdot F_{com}(k.\omega_o)$

Vorteilhaft wird als Zielfunktion aber $Uab^2$ minimiert, also

$$F \quad = \quad \sum_{k=0}^{M} \ (V_k{}^2 \ + \ W_k{}^2)$$

so daß sich die Koeffizienten des Gradientenvektors einfach errechnen lassen:

$$\frac{\partial}{\partial w_o.ti} F = 2\sum_{k=0}^{M} \ (V_k \cdot \frac{\partial}{\partial \omega_o.ti} \ V_k \ + \ W_k \ \cdot \ \frac{\partial}{\partial \omega_o.ti} \ W_k)$$

Die weitere Berechnung ist im folgenden kurz angegeben:

$$\frac{\partial}{\partial w_o.ti} W_o = - \frac{vz(ti)}{8\pi} \qquad \frac{\partial}{\partial w_o.ti} W_k = \frac{(-1)^k}{4\pi}\left[vz(ti)\cdot\cos(k.\omega_o.ti)\right]$$

$$\frac{\partial}{\partial w_o.ti} V_k = \frac{(-1)^k}{4\pi}\left[-vz(ti)\cdot\sin(k.\omega_o.ti)\right]$$

$$\frac{\partial}{\partial \omega_o.ti} F = \frac{vz(ti)}{\pi}\left[(a_1-A^*\cos\varphi^*)\cos(\omega_o.ti)+(b_1-A^*\sin\varphi^*)\sin(\omega_o.ti)\right.$$
$$\left.+\frac{b_o}{4}+\sum_{k=2}\left\{(F_{com}(k.\omega_o)\cdot G(k.\omega_o))^2\cdot(a_k\cdot\cos(k.\omega_o.ti)-b_k\cdot\sin(k.\omega_o.ti))\right\}\right]$$

Als geeignete Variationsmethode hat sich das Gradientenverfahren erwiesen, bei dem zunächst von einem Betriebspunkt ausgegangen wird, der durch einen Vektor mit den Komponenten ti (im Beispiel also 176 Komponenten) ausgegangen wird. Zu diesem Vektor $\underline{\Phi}$ wird der Gradientenvektor Grad F errechnet, dessen einzelne Komponenten durch

$$Grad_{(ti)} F = \frac{\partial}{\partial \omega_o.ti} (Uab)^2$$

bestimmt wird. Es hat sich als vorteilhaft erwiesen, diesen Gradienten auf seinen Betrag |Grad F| zu normieren. Dadurch wird ein Richtungsvektor $\Delta\underline{\Phi}$ erzeugt, der stets in die Richtung zeigt, bei der sich eine Änderung des Betriebspunktes in einer maximalen Änderung der Zielfunktion auswirkt. Sodann wird eine positive Zahl $\lambda$ als Schrittweite vorgegeben, um für einen neuen Betriebspunkt $\underline{\Phi} + \lambda.\Delta\underline{\Phi}$ den zugehörigen Wert $F(\underline{\Phi} + \lambda.\Delta\underline{\Phi})$ zu berechnen.

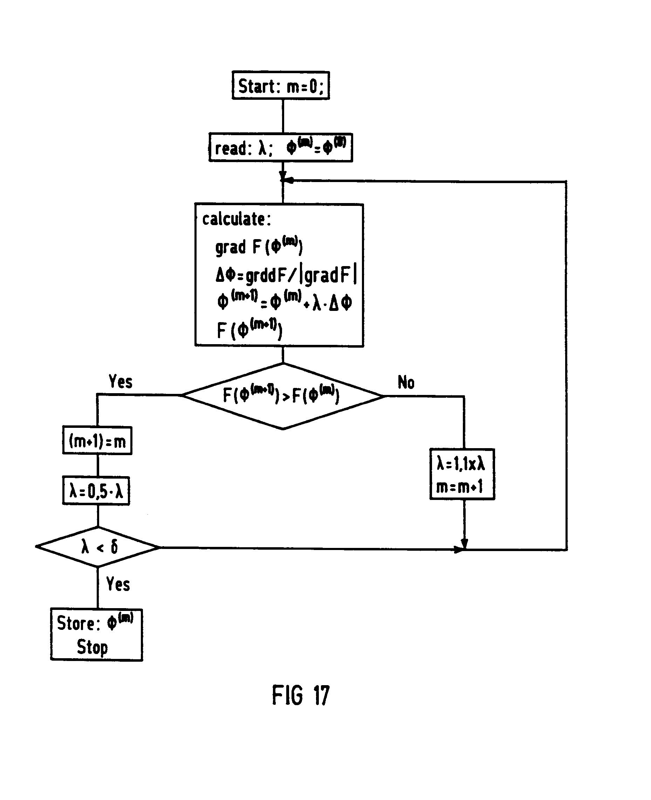

FIG 17 zeigt den Optimierungsalgorithmus als Flußdiagramm, wobei zunächst durch Einlesen der Startwerte ti der Betriebspunkt $\Phi^{(O)}$ vorgegeben und mit einem Startwert $\lambda$ begonnen wird.

Die virtuelle Variation erfolgt iterativ, wobei im Iterationsschritt (m) jeweils mittels des Funktionsteils und der darin gespeicherten Winkelfunktionen Grad $F^{(m)}$, $\underline{\Delta\Phi}^{(m)}$, $\underline{\Phi}^{(m+1)}$ und $F^{(m+1)} = F^{(m+1)}(\underline{\Phi}^{(m+1)})$ berechnet wird. Ist der neue Wert der Zielfunktion kleiner als der zuletzt berechnete, so wird das Verfahren fortgesetzt, wobei die Schrittweite vergrößert werden kann. Ist dies aber nicht der Fall, so wird dieser Iterationsschritt (m) ignoriert und wieder von dem dem letzten Iterationsschritt (m-1) zugeordneten Betriebspunkt $\underline{\Phi}$(m) ausgegangen, aber nunmehr die Schrittweite halbiert.

Das Verfahren kann abgebrochen werden, wenn selbst bei einer Untergrenze $\delta$ der Schrittweite nur noch eine Erhöhung der Zielfunktion erreichbar ist. Dies kann in ungünstigen Fällen erst nach 25 bis 200 Iterationen eintreten, so daß sich die entsprechende Berechnung über mehrere Perioden erstreckt. Es kann aber auch vorgesehen sein, die Berechnung nach einer vorgegebenen Maximalzahl von Iterationsschritten abzubrechen und die bis dahin ermittelten Werte, die noch nicht vollständig optimiert sind, in den Speicher MM (FIG 14) einzulesen, aus dem sie dann zur Abgabe der Zündimpulse abgerufen werden, sobald die auf die Netzspannung synchronisierte Phase $\phi(t)$ den durch $\omega O . ti$ bestimmten Phasenwinkel erreicht.

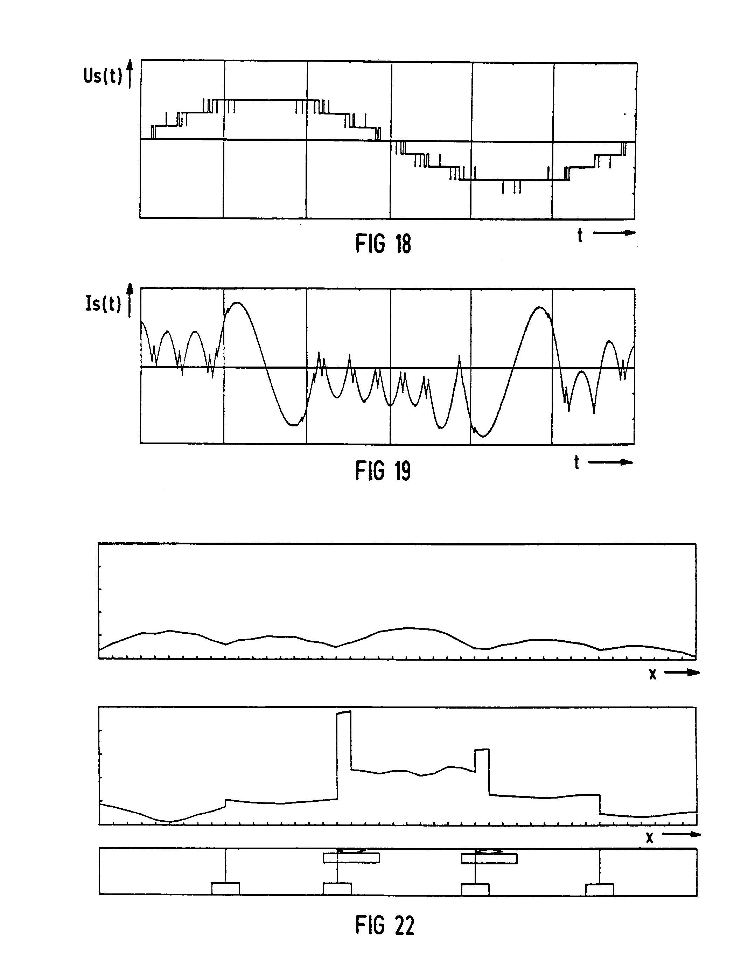

Von einem Anfangszustand ausgehend, wie er durch die bereits besprochenen Figuren 5 und 6 sowie 8 bis 12 dargestellt ist, ergeben sich durch die Optimierung nunmehr die Figuren 18 bis 20.

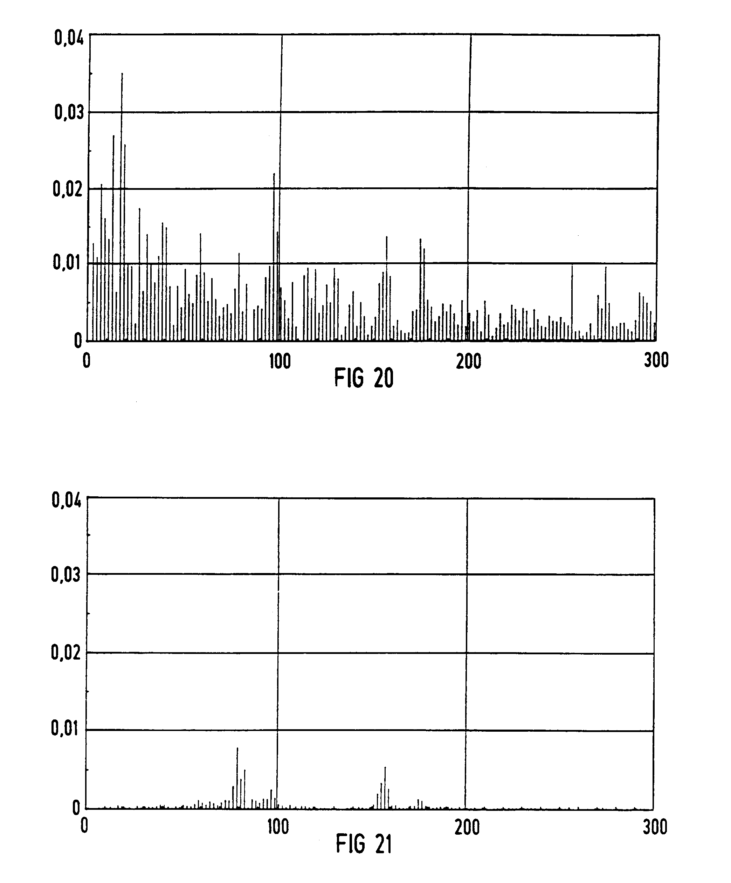

Dabei ist wiederholt die Zeitspanne zwischen einem Einschaltimpuls und einem Ausschaltimpuls durch die Optimierung derart zusammengeschrumpft, daß zwei Impulse zusammengelegt wurden, also die Pulszahl erniedrigt werden konnte, wie das Pulsmuster der Spannung Us(t) in FIG 18 zeigt. Der Strom In(t) weist dabei erhebliche Oberschwingungen niedriger Ordnungszahl auf (FIG 19) und auch das Spektrum Us-(k.$\omega$O) der Stromrichterspannung Us(t) enthält hauptsächlich derart niedrige Frequenzen (FIG 20). In Folge des Spannungsabfalls am Impedanzelement sind jedoch die entsprechenden niederfrequenten Spektrallinien im Spektrum der Netzspannung Un(t) praktisch nicht mehr vorhanden (FIG 21). Die niederfrequenten Störspannungen werden also bereits an den Drosseln des Oberschwingungsfilters weitgehend gedämpft. Wie FIG 22 zeigt, werden zwar niederfrequente Störströme dem Fahrdraht eingeprägt, fließen dort aber über die nächsten Unterwerke ab, so daß sich in der räumlichen Verteilung der Spannung nur schwache stehende Wellen bemerkbar machen.

Ein geeignetes Programm zur Durchführung der Fast-Fourier-Transformation und der Ermittlung der Übertragungsfunktion ist in den Parallelanmeldungen des gleichen Anmelders "Verfahren und Vorrichtung zur Erfassung von Resonanzmeßgrößen eines an einem Stromrichter angeschlossenen Netzes" und "Vorrichtung und Verfahren zum optimierten Betrieb eines an ein Netz angeschlossenen Stromrichters" beschrieben. Die Teile dieser Parallelanmeldungen, die die Erfassung der Netzimpedanz oder einer anderen Übertragungsfunktion sowie die Fourier-Analyse betreffen, sind Teil der beanspruchten Offenbarung dieser Anmeldung.

Der in diesen anderen Anmeldungen beschriebene, optimierte Betrieb minimiert letztlich eine Zeitfunktion, nämlich die jeweils in einem Modell des Netzes gespeicherte Energie, wobei jeweils ein Schaltzeitpunkt nach dem anderen berechnet und unmittelbar zur Ansteuerung der Schalteinrichtungen verwendet werden kann. Im Gegensatz hierzu wird bei der vorliegenden Erfindung eine Zielfunktion der Fourier-Koeffizienten minimiert. Allerdings ist es auch dabei möglich, zyklisch einen Schaltzeitpunkt nach dem anderen zu berechnen. Dadurch kann jeder Schaltzeitpunkt direkt vor der Ansteuerung des entsprechenden Schaltelementes optimiert werden. Dies ist möglich, da die Beschränkung auf die Variation einer Variablen den Rechenaufwand wesentlich verringert. Die Erfahrungen mit einem derart optimierten Betriebsfall des Stromrichters zeigten jedoch bei den heute verfügbaren Mitteln verhältnismäßig starke Oberschwingungen niedriger Ordnungszahl.

Bei einer anderen Variante mit zyklischer Variation der Schaltzeitpunkte werden jeweils nicht alle Schaltzeitpunkte einer ganzen Periode, sondern nur ein Teil berücksichtigt, der nach bekannten Selektionsmethoden, z.B. aus der "fastfourier-transformation" bekannten Bewertungsfenstern bestimmt wird. Diese auf Fourier-Koeffizienten aufbauenden Optimierungsalgorithmen liefern im Test zwar gegenüber den Figuren 18 bis 22 keine Verbesserung, jedoch könnte die durch die kürzere Rechenzeit erreichbare schnellere Berücksichtigung von Zustandsänderungen bei anderen Anwendungen von Vorteil sein.

17

**Patentansprüche**

1. Verfahren zum optimierten Betrieb eines an ein Netz angeschlossenen Stromrichters mit Schaltelementen zur Erzeugung einer gepulsten Ausgangsgröße, mit folgenden Merkmalen:

   a) der Betriebszustand des Stromrichters wird durch Schaltwinkel ($\omega_o.ti$) vorgegeben und aus den Schaltwinkeln entsprechenden Schaltwinkelsignalen werden durch Vergleich mit dem Phasenwinkel ($\phi(t)$) einer Referenzspannung vorgegebener Grundfrequenz die Zeitpunkte bestimmt, bei denen die Schaltelemente des Stromrichters betätigt werden,

   b) am Anfang eines Optimierungszyklus werden durch Messung einer am Netzanschluß auftretenden elektrischen Größe ($Un(t)$) und Fourier-Transformation Meßsignale ($Un(k.\omega_o);G(k.\omega_o)$) für Fourier-Koeffizienten der elektrischen Größe gebildet,

   c) aus den Meßsignalen ($Un(k.\omega_o); G(k.\omega_o)$) werden optimierte Schaltwinkel ermittelt, bei denen eine von den Fourier-Koeffizienten und von einem durch veränderliche Steuerwinkel ($\omega_o.ti$) veränderlichen Betriebszustand abhängige Zielfunktion ($Uab;F(\underline{\Phi})$) ein Optimierungskriterium erfüllt, wobei

   d) der veränderliche Betriebszustand durch mathematische Funktionen ($a_k,b_k$) virtuell veränderlicher Steuerwinkel (ti) beschrieben wird, und wobei die Funktionen ($a_k,b_k$) aus einem mathematischen Modell des Stromrichters gewonnen und aus diesen Funktionen als optimierte Schaltwinkel die Werte der virtuell veränderlichen Schaltwinkel errechnet werden, bei denen die Zielfunktion einen optimalen Wert annimmt, und

   e) der Betriebszustand des Stromrichters wird am Ende des Optimierungszyklus und mindestens bis zum Beginn des nächsten Optimierungszyklus durch die optimierten Schaltwinkel vorgegeben.

2. Verfahren nach Anspruch 1, **dadurch gekennzeichnet,** daß durch Verändern des veränderlichen Betriebszustandes ($\underline{\Phi}$) der Gradient (grad F) der Zielfunktion ($F(\underline{\Phi})$) bestimmt und der veränderliche Betriebszustand ($\underline{\Phi}$) in Richtung ($\lambda.\Delta\underline{\Phi}$) des Gradienten verändert wird, bis die Zielfunktion ($F(\underline{\Phi})$) einen optimalen Wert einnimmt.

3. Verfahren nach Anspruch 1, **dadurch gekennzeichnet,** daß als Zielfunktion ein gewichteter Mittelwert

$$\left( \sum_k |G(k.\omega_o).Us(k.\omega_o) - Un(k.\omega_o)*|^2 \right)$$

der Fourier-Koeffizienten ($G(k.\omega_o)$ verwendet wird und das Optimierungskriterium erfüllt ist, wenn der Mittelwert bei Verändern des veränderlichen Betriebszustandes nicht mehr abnimmt.

4. Verfahren nach Anspruch 1, **dadurch gekennzeichnet,** daß die optimierten Schaltwinkel durch virtuelle Variation der virtuell veränderlichen Schaltwinkel errechnet werden.

5. Verfahren zum optimierten Betrieb eines über einen Abgriff an ein Netz angeschlossenen Stromrichters mit Schaltelementen zur Erzeugung einer gepulsten Ausgangsgröße am Ausgang des Stromrichters, mit folgenden Merkmalen:

   a) Zu Beginn eines Optimierungszyklus werden die Fourier-Koeffizienten ($Us(k.\omega_o)$, $Un(k.\omega_o)$) der gepulsten Ausgangsgröße ($Us(t)$) und einer von der gepulsten Ausgangsgröße abhängigen elektrischen Größe ($Un(t)$) am Abgriff sowie deren Übertragungsfunktion ($Gn(k.\omega_o)$) bestimmt, und

   b) die Schaltzeitpunkte zum Betätigen der Schaltelemente werden solange verändert, bis eine Zielfunktion ($Uab$) der Schaltzeitpunkte einen optimalen Wert annimmt, wobei

   c) die Zielfunktion Modell-Fourier-Komponenten ($a_k$, $b_k$) für die gepulste Ausgangsgröße enthält, die mit der Übertragungsfunktion ($Gn(k.\omega_o)$ gewichtet sind und Funktionen der Schaltzeitpunkte (ti) sind.

6. Verfahren nach Anspruch 5, **dadurch gekennzeichnet,** daß die Schaltzeitpunkte als Variable der Funktionen virtuell verändert werden, bis die Zielfunktion bei den optimalen Werten der virtuell veränderten Schaltzeitpunkte den optimalen Wert annimmt, und daß nach Bestimmung der optimalen Werte die Schaltelemente jeweils zu Zeitpunkten betätigt werden, die durch die optimierten Werte vorgegeben werden.

7. Verfahren nach Anspruch 6, daß der optimale Wert der Zielfunktion dann erreicht ist, wenn der effektive Mittelwert der Abweichung einer durch die Modell-Fourier-Komponenten gegebenen Modellgröße von

EP 0 494 137 B1

einer durch Sollwerte vorgegebenen Größe minimal ist.

**8.** Verfahren nach Anspruch 5, **dadurch gekennzeichnet,** daß die Schaltzeitpunkte nach folgendem mathematischen Algorithmus virtuell verändert werden:

(i) Die Anzahl der Schaltzeitpunkte wird vorgegeben, jedem Schaltzeitpunkt wird eine virtuelle Variable zugeordnet, den virtuellen Variablen werden Funktionen zugeordnet, die in einem mathematischen Modell die gepulste Ausgangsgröße des Stromrichters beschreiben, den Funktionen werden Modell-Fourier-Koeffizienten entnommen, die als Funktionen der Variablen die Fourier-Koeffizienten der gepulsten Ausgangsgröße beschreiben,

(ii) den Modell-Fourier-Koeffizienten werden die Koeffizienten der Übertragungsfunktion als zeitunabhängige Gewichtsfaktoren zugeordnet und den mit den Faktoren gewichteten Modell-Fourier-Koeffizienten wird eine Zielfunktion zugeordnet,

(iii) für die Zielfunktion werden die optimierten Werte der der Variablen errechnet, bei denen die Zielfunktion ein Minimum aufweist,

und daß durch Vergleich der optimierten Werte mit dem Phasenwinkel ($\phi$(t)) einer mit der Fourier-Grundschwingung ($\omega_o$.t) synchronisierten Referenzspannung werden die Schaltzeitpunkte bestimmt, bei denen die Schaltelemente des Stromrichters betätigt werden.

**9.** Verfahren zum Optimieren des Betriebes eines an ein Netz angeschlossenen Stromrichters mit Schaltelementen zur Erzeugung einer gepulsten Ausgangsgröße, mit folgenden Merkmalen:

a) Durch Betätigen der Schaltelemente wird die gepulste Ausgangsgröße dem stromrichterseitigen Ende eines zwischen Stromrichter und Netz angeordneten Impedanzelementes eingeprägt,

b) zu Beginn eines Optimierungszyklus wird eine elektrische Zustandsgröße ($U_n$(t)) am netzseitigen Ende des Impedanzelementes gemessen und durch Fourier-Transformation werden erste Fourier-Koeffizienten ($G(k.\omega_o)$) bestimmt, die die Übertragungsfunktion des Impedanzelementes bestimmen,

c) für die gepulste Ausgangsgröße werden zweite Fourier-Koeffizienten ($a_k$, $b_k$) bestimmt, die sich entsprechend der gepulsten Ausgangsgröße ändern, wenn die auf eine Periode vorgegebener Grundfrequenz bezogenen Zeitpunkte ($t_i$), an denen die Schaltelemente betätigt werden, geändert werden,

d) aus der Bedingung, daß bei optimierten Schaltzeitpunkten eine Zielfunktion ($U_{ab}$), die die mit den ersten Fourier-Koeffizienten gewichteten zweiten Fourier-Koeffizienten enthält, einen optimalen Wert annimmt, werden die optimierten Schaltzeitpunkte ermittelt, und

e) die Schaltelemente werden zu den optimierten Schaltzeitpunkten betätigt.

**10.** Verfahren nach Anspruch 9, **dadurch gekennzeichnet,** daß einem mathematischen Modell des Stromrichters die zweiten Fourier-Koeffizienten als Funktionen virtueller Schaltzeitpunkte entnommen werden und daß die optimierten Werte mathematisch aus diesen Funktionen und der Bedingung errechnet werden.

**11.** Verfahren nach Anspruch 10, **dadurch gekennzeichnet,** daß für die virtuellen Schaltzeitpunkte ($\underline{\Phi}$) Startwerte ($\underline{\Phi}$(o)) vorgegeben und die optimierten Werte durch virtuelle Variation ($\underline{\Phi} + \lambda.\underline{\Delta\Phi}$) der Startwerte errechnet werden.

**12.** Verfahren nach Anspruch 9, **dadurch gekennzeichnet,** daß als gepulste Ausgangsgröße ($U_s$(t)) dem stromrichterseitigen Ende der Impedanz eine Folge von Spannungspulsen eingeprägt und als abhängige elektrische Größe am netzseitigen Ende des Impedanzelementes die am Netz abgegriffene Netzspannung ($U_n$(t)) gemessen wird.

**13.** Vorrichtung zum optimierten Betrieb eines über einen Abgriff an ein Netz angeschlossenen Stromrichters mit Schaltelementen zur Erzeugung einer gepulsten Ausgangsgröße, mit

a) einer am Abgriff angeordneten Meßeinrichtung (MNET) für eine elektrische Zustandsgroße ($U_n$(t) des Abgriffs, und

b) einer Rechen- und Steuereinrichtung (PROC) mit

i) einer ersten Rechenstufe (FFT) zur Fourier-Transformation des von der Meßeinrichtung empfangenen Signals,

ii)einer zweiten Rechenstufe (VAR), die von in der ersten Rechenstufe gebildeten ersten Fourier-Koeffizienten ($G_n(k.\omega_o)$) gespeist ist und nach folgendem Programm arbeitet:

19

EP 0 494 137 B1

- einem vorgegebenen Betriebszustand ($\underline{\Phi}$) wird eine Anzahl vorgegebener Schaltwinkel (ti) zugeordnet und einem veränderten Betriebszustand ($\underline{\Phi} + \lambda.\Delta\underline{\Phi}$) wird eine gleiche Anzahl veränderter Schaltwinkel zugeordnet,
- jedem Betriebszustand werden zweite Fourier-Koeffizienten ($a_k$, $b_k$) zugeordnet,
- es wird eine Zielfunktion des Betriebszustandes definiert, die die ersten Fourier-Koeffizienten ($G(k.\omega_o)$) und die den veränderlichen Betriebszuständen zugeordneten zweiten Fourier-Koeffizienten ($a_k$, $b_k$) enthält,
- es wird ein optimaler Betriebszustand definiert, bei dem die Zielfunktion ein Optimierungskriterium erfüllt,
- aus dem Optimierungskriterium der Zielfunktion wird der Betriebszustand ermittelt, bei dem die in der Zielfunktion enthaltenen, vom veränderlichen Betriebszustand abhängigen zweiten Fourier-Koeffizienten die Werte annehmen, bei denen die Zielfunktion das Optimierungskriterium erfüllt,
- und die dem ermittelten Betriebszustand zugeordneten Schaltwinkel werden abgespeichert, und
iii)die abgespeicherten Schaltwinkel werden impulsgebenden Mitteln zugeführt, die durch Vergleich mit dem Phasenwinkel einer auf die harmonische Grundschwingung der Fourier-Transformation synchronisierten Referenzspannung Zündimpulse erzeugen, die eine Betätigung der Schaltelemente des Stromrichters auslösen.

14. Vorrichtung nach Anspruch 13, **gekennzeichnet durch** eine zweite am Abgriff angeordnete Meßeinrichtung (MDC) zur Messung der gepulsten Ausgangsgröße des Stromrichters, deren Meßsignal ebenfalls der ersten Rechenstufe zugeführt ist.

15. Vorrichtung nach Anspruch 13, **dadurch gekennzeichnet,** daß die Rechen- und Steuereinrichtung Mittel enthält, die die impulsgebenden Mittel mit aus vorgegebenen Sollwerten ermittelten Startwerten für die Steuerwinkel speist und der zweiten Rechenstufe Startwerte für den Betriebszustand vorgibt.

16. Vorrichtung nach Anspruch 13, **dadurch gekennzeichnet,** daß mit den abgespeicherten Steuerwinkeln die impulsgebenden Mittel jeweils bis zur erneuten Abspeicherung der optimierten Schaltwinkel unverändert gespeist werden.

17. Vorrichtung zum optimierten Betrieb eines über einen Abgriff an ein Netz angeschlossenen Stromrichters mit Schaltelementen zur Erzeugung einer gepulsten Ausgangsgröße, mit
a) zwischen dem Stromrichter (DC) und dem Netz (NET) ist ein Impedanzelement (LCR) angeordnet,
b) am netzseitigen Ende des Impedanzelementes ist eine Meßeinrichtung (MNET) angeordnet, deren Ausgangssignal einer Steuer- und Regeleinrichtung zugeführt ist,
c) die Steuer- und Regeleinrichtung enthält eine erste Rechenstufe (FFT) zur Fourier-Transformation des empfangenen Signals,
d) die von der ersten Rechenstufe errechneten Fourier-Koeffizienten ($Gn(k.\omega_o)$) werden einer zweiten Rechenstufe (FKT, (VAR) zugeführt, die nach folgendem Programm gesteuert ist:
i) jedem Betriebszustand ($\Phi$) ist eine Anzahl von Variablen (ti) zugeordnet,
den Harmonischen ($k.\omega_o$) der Fourier-Transformation sind Funktionen ($a_k$, $b_k$) der Variablen zugeordnet, die einem mathematischen Modell entnommen sind und Modell-Fourier-Koeffizienten der gepulsten Ausgangsgröße des Stromrichters darstellen, es wird eine Zielfunktion der Variablen definiert, die von den Fourier-Koeffizienten ($G(k.\omega_o)$ der Übertragungsfunktion und den Modell-Fourier-Koeffizienten ($a_k$, $b_k$) abhängig ist,
es ist ein Optimierungskriterium ($U_{ab}$ minimal) definiert, das von der Funktion bei optimierten Werten der Variablen erfüllt wird,
ii)nach diesen zugrunde gelegten Vereinbarungen werden aus den Optimierungskriterium der Zielfunktion mittels in der ersten Rechenstufe gebildeten Fourier-Koeffizienter nach einer mathematischen Methode die optimierten Werte der Zündwinkel berechnet,
iii)die berechneten Werte werden zwischengespeichert und einer impulsgebenden Stufe (MP) zugeführt, die durch Vergleich der zwischengespeicherten Werte (ti) mit dem Phasenwinkel ($\phi(t)$) einer auf die Grundfrequenz der Fourier-Transformation synchronisierten Referenzspannung Impulse zum Betätigen der Schaltelemente gibt.

20

**18.** Vorrichtung nach Anspruch 17, **dadurch gekennzeichnet,** daß die Meßeinrichtung (MNET) eine Spannungsmeßeinrichtung ist.

**19.** Vorrichtung nach Anspruch 17, **dadurch gekennzeichnet,** daß am stromrichterseitigen Ende des Impedanzelementes eine zweite Spannungsmeßeinrichtung (MDC) angeordnet ist, deren Ausgang mit der ersten Rechenstufe verbunden ist.

**Claims**

**1.** Method for the optimized operation of a power converter connected to a power system and having switching elements for generating an impulse-commutated output variable, this method having the following features:

(a) the operating state of the power converter is pre-selected by means of the switching angles ($\omega_o$.ti), and the times at which the switching elements of the power converter are actuated are determined from switching angle signals corresponding to the switching angles, by means of a comparison with the phase angle ($\phi$(t)) of a reference voltage of a pre-selected fundamental frequency,

(b) at the start of an optimization cycle, measuring signals (Un(k.$\omega_o$); G(k.$\omega_o$)) for Fourier coefficients of the electrical variable are formed by means of measurement of an electrical variable (Un(t)) appearing at the connection to the power system and by means of Fourier transformation,

(c) optimized switching angles are determined from the measuring signals (Un(k.$\omega_o$); G(k.$\omega_o$)), at which switching angles a target function (Uab;F ($\underline{\Phi}$)) dependent upon the Fourier coefficients and upon an operating state which can be varied by means of variable control angles ($\omega_o$.ti), meets an optimization criterion, whereby

(d) the variable operating state is described by mathematical functions ($a_k$, $b_k$) of a virtually variable control angle (ti), and whereby the functions ($a_k$, $b_k$) are obtained from a mathematical model of the power converter, and the values of the virtually variable switching angles at which the target function assumes an optimum value are calculated from these functions as optimized switching angles, and

(e) the operating state of the power converter is pre-selected at the end of the optimization cycle, at least until the start of the next optimization cycle, by means of the optimized switching angles.

**2.** Method according to claim 1, characterised in that the gradient (grad F) of the target function (F($\underline{\Phi}$)) is determined by varying the variable operating state ($\underline{\Phi}$), and the variable operating state ($\underline{\Phi}$) is varied in the direction ($\lambda.\Delta\underline{\Phi}$) of the gradient until the target function (F($\underline{\Phi}$)) achieves an optimum value.

**3.** Method according to claim 1, characterised in that a weighted mean value

$$( \Sigma_k \left| G(k.\omega_o).Us(k.\omega_o) - Un(k.\omega_o)^* \right|^2 )$$

of the Fourier coefficients (G(k.$\omega_o$)) is used as the target function, and the optimization criterion is met when the mean value no longer decreases when the variable operating state varies.

**4.** Method according to claim 1, characterised in that the optimized switching angles can be calculated by virtual variation of the virtually variable switching angles.

**5.** Method for the optimized operation of a power converter connected to a power system by way of a tap and having switching elements for generating an impulse-commutated output variable at the output of the power converter, this method having the following features:

(a) at the start of an optimization cycle, the Fourier coefficients (Us(k.$\omega_o$), Un(k.$\omega_o$)) of the impulse-commutated output variable (Us(t)) and of an electrical variable (Un(t)) dependent upon the impulse-commutated output variable, as well as the transfer function (Gn(k.$\omega_o$)) thereof, are determined at the tap, and

(b) the switching times for actuating the switching elements are varied until a target function (Uab) of the switching times assumes an optimum value, whereby

(c) the target function comprises model Fourier components ($a_k$, $b_k$) for the impulse-commutated output variable, which components are weighted with the transfer function (Gn(k.$\omega_o$)) and are functions of the switching times (ti).

**6.** Method according to claim 5, characterised in that the switching times are virtually varied as a variable of the functions until the target function assumes the optimum value at the optimum values of the virtually varied switching times, and in that, after the optimum values have been determined, the switching elements are actuated at respective times which are pre-selected by means of the optimized values.

**7.** Method according to claim 6, in that the optimum value of the target function is reached when the effective mean value of the deviation of a model variable, which is defined by model Fourier components, from a variable pre-selected by means of desired values, is minimal.

**8.** Method according to claim 5, characterised in that the switching times are virtually varied according to the following mathematical algorithm:

(i) the number of switching times is pre-selected; a virtual variable is assigned to each switching time; functions which describe the impulse-commutated output variable of the power converter in a mathematical model are assigned to the virtual variables; model Fourier coefficients which, as functions of the variables, describe the Fourier coefficients of the impulse-commutated output variable, are derived from the functions,

(ii) the coefficients of the transfer function are assigned to the model Fourier coefficients as time-independent weight factors, and a target function is assigned to the model Fourier coefficients weighted with the factors,

(iii) the optimized values of the variables, at which the target function is at minimum, are calculated for the target function,

and in that the switching times at which the switching elements of the power converter are actuated, are determined by means of a comparison of the optimum values with the phase angle ($\phi(t)$) of a reference voltage synchronised with the Fourier fundamental wave ($\omega_o.t$).

**9.** Method for optimization of the operation of a power converter connected to a power system and having switching elements for generating an impulse-commutated output variable, this method having the following features:

(a) the impulse-commutated output variable is applied at the end of an impedance element arranged between the power converter and the power system, on the power converter side, by actuation of the switching elements,

(b) at the start of an optimization cycle, an electrical state variable ($Un(t)$) is measured at the end of the impedance element on the power system side, and first Fourier coefficients ($G(k.\omega_o)$) which determine the transfer function of the impedance element are determined by Fourier transformation,

(c) second Fourier coefficients ($a_k$, $b_k$) are determined for the impulse-commutated output variable, which coefficients vary according to the impulse-commutated output variable when the times ($ti$) relating to a period of a pre-selected fundamental frequency at which the switching elements are actuated, are varied,

(d) the optimized switching times are determined from the precondition that, at optimized switching times, a target function ($Uab$) which comprises the second Fourier coefficients weighted with the first Fourier coefficients, assumes an optimum value, and

(e) the switching elements are actuated at the optimized switching times.

**10.** Method according to claim 9, characterised in that the second Fourier coefficients are derived from a mathematical model of the power converter, as functions of virtual switching times, and in that the optimized values are calculated mathematically from these functions and from the precondition.

**11.** Method according to claim 10, characterised in that starting values ($\underline{\Phi}(o)$) are pre-selected for the virtual switching times ($\underline{\Phi}$), and the optimized values are calculated by virtual variation ($\underline{\Phi} + \lambda.\underline{\Delta\Phi}$) of the starting values.

**12.** Method according to claim 9, characterised in that a series of voltage pulses is applied as an impulse-commutated output variable ($Us(t)$) at the end of the impedance on the power converter side, and the power system voltage ($Un(t)$) tapped at the power system is measured as a dependent electrical variable at the end of the impedance element on the power system side.

22

13. Device for the optimized operation of a power converter connected to a power system by way of a tap and having switching elements for generating an impulse-commutated output variable, this device having

(a) a measuring device (MNET) arranged at the tap for an electrical state variable ($U_n(t)$) of the tap, and

(b) a computing and control device (PROC) having

(i) a first computing step (FFT) for Fourier transformation of the signal received from the measuring device,

(ii) a second computing step (VAR) which is fed with first Fourier coefficients ($G_n(k.\omega_o)$) formed in the first computing step and operates according to the following programme:

- a number of pre-selected switching angles ($t_i$) is assigned to a pre-selected operating state ($\underline{\Phi}$), and an identical number of varied switching angles is assigned to a varied operating state ($\underline{\Phi} + \lambda.\Delta\underline{\Phi}$),

- second Fourier coefficients ($a_k$, $b_k$) are assigned to each operating state,

- a target function of the operating state is defined, which target function comprises the Fourier coefficients ($G(k.\omega_o)$) and the second Fourier coefficients ($a_k$, $b_k$) assigned to the variable operating states,

- an optimum operating state at which the target function meets an optimization criterion, is defined,

- the operating state in which the second Fourier coefficients, which are comprised in the target function and are dependent upon the variable operating state, assume the values at which the target function meets the optimization criterion, is determined from the optimization criterion of the target function,

- and the switching angles assigned to the determined operating state are stored, and

(iii) the stored switching angles are supplied to pulse generating means which generate firing pulses by means of a comparison with the phase angle of a reference voltage synchronised with the harmonic fundamental wave of the Fourier transformation, which firing pulses trigger actuation of the switching elements of the power converter.

14. Device according to claim 13, characterised by a second measuring device (MDC) arranged at the tap for measuring the impulse-commutated output variable of the power converter whose measuring signal is also supplied to the first computing step.

15. Device according to claim 13, characterised in that the computing and control device comprises a means which feeds the pulse generating means with starting values determined for the control angles from pre-selected desired values and pre-selects starting values of the second computing step for the operating state.

16. Device according to claim 13, characterised in that, in each case, the pulse generating means continue to be fed with the stored control angles until renewed storage of the optimized switching angles takes place.

17. Device for the optimized operation of a power converter connected to a power system by way of a tap and having switching elements for generating an impulse-commutated output variable, in which

(a) an impedance element (LCR) is arranged between the power converter (DC) and the power system (NET),

(b) at the end of the impedance element on the power system side there is arranged a measuring device (MNET), the output signal of which is supplied to a control and regulating device,

(c) the control and regulating device comprises a first computing step (FFT) for the Fourier transformation of the signal received,

(d) the Fourier coefficients ($G_n(k.\omega_o)$) calculated from the first computing step are supplied to a second computing step (FKT, VAR) which is controlled according to the following programme:

(i) a number of variables ($t_i$) is assigned to each operating state ($\underline{\Phi}$),

functions ($a_k$, $b_k$) of the variables which are derived from a mathematical model and represent model Fourier coefficients of the impulse-commutated output variable of the power converter, are assigned to the harmonics ($k.\omega_o$) of the Fourier transformation; a target function of the variables which is dependent upon the Fourier coefficients ($G(k.\omega_o)$) of the transfer function and upon the model Fourier coefficients ($a_k$, $b_k$), is defined,

23

an optimization criterion ($U_{ab}$ minimal) which is met by the function at the optimized values of the variables, is defined,

(ii) in accordance with these declarations which are used as a basis, the optimized values of the firing angles are calculated according to a mathematical method from the optimization criterion of the target function by means of Fourier coefficients formed in the first computing step,

(iii) the calculated values are placed in intermediate storage and are supplied to a pulse generating step (MP) which emits pulses for actuating the switching elements, by means of a comparison of the values (ti) in intermediate storage with the phase angle ($\psi$(t)) of a reference voltage which is synchronised with the fundamental frequency of the Fourier transformation.

18. Device according to claim 17, characterised in that the measuring device (MNET) is a voltage measuring device.

19. Device according to claim 17, characterised in that a second voltage measuring device (MDC) is arranged at the end of the impedance element on the power converter side, the output of the second voltage measuring device (MDC) being connected to the first computing step.

## Revendications

1. Procédé pour faire fonctionner de façon optimisée un convertisseur statique raccordé à un réseau et comportant des éléments de commutation pour produire une grandeur de sortie pulsée, présentant les caractéristiques suivantes :

a) l'état de fonctionnement du convertisseur statique est prédéterminé par des angles de commutation ($\omega_0$.ti), et que les instants auxquels les éléments de commutation du convertisseur statique sont activés, sont déterminés à partir de signaux d'angles de commutation qui correspondent à des angles de commutation, par comparaison à l'angle de phase ($\phi$(t)) d'une tension de référence possédant une fréquence de base prédéterminée,

b) au début d'un cycle d'optimisation sont formés, par mesure d'une grandeur électrique (Un(t)), apparaissant sur la borne du réseau, et au moyen d'une transformation de Fourier, des signaux de mesure (Un(k.$\omega_0$); G(k.$\omega_0$)) pour des coefficients de Fourier de la grandeur électrique,

c) à partir des signaux de mesure (Un(k.$\omega_0$); G(k.$\omega_0$)) sont déterminés des angles de commutation optimisés, pour lesquels une fonction cible (Uab; F($\underline{\Phi}$)), qui dépend des coefficient de Fourier et d'un état de fonctionnement qui est variable sur la base d'angle de commande variables ($\omega_0$.ti), satisfait à un critère d'optimisation,

d) l'état de fonctionnement variable étant décrit par des fonctions mathématiques ($a_k$, $b_k$) d'angles de commande (ti) variables de façon virtuelle, tandis que les fonctions ($a_k$, $b_k$) sont obtenues à partir d'un modèle mathématique du convertisseur statique et qu'à partir de ces fonctions sont calculées, en tant qu'angles de commutation optimisés, les valeurs des angles de commutation variables d'une manière virtuelle, pour lesquels la fonction cible prend une valeur optimale, et

e) l'état de fonctionnement du convertisseur statique est prédéterminé par l'angle de commutation optimisé, à la fin du cycle d'optimisation et au moins jusqu'au début du cycle d'optimisation immédiatement suivant.

2. Procédé suivant la revendication 1, caractérisé par le fait que le gradient (grad F) de la fonction cible (-(F)($\underline{\Phi}$) est déterminé par modification de l'état de fonctionnement variable ($\underline{\Phi}$) et que l'état de fonctionnement variable ($\underline{\Phi}$) est modifié dans la direction ($\lambda$.$\Delta\underline{\Phi}$) du gradient jusqu'à ce que la fonction cible (F($\underline{\Phi}$) prenne une valeur optimale.

3. Procédé suivant la revendication 1, caractérisé par le fait qu'on utilise comme fonction cible une valeur moyenne pondérée

$$\left( \sum_k \left| G(k.\omega_0).Us(k.\omega_0) - Un(k.\omega_0)^* \right|^2 \right)$$

des coefficients de Fourier (G(k.$\omega_0$)) et que le critère d'optimisation est satisfait lorsque la valeur moyenne ne diminue plus lors d'une modification de l'état de fonctionnement variable.

**4.** Procédé suivant la revendication 1, caractérisé par le fait que les angles de commutation optimisés sont calculés au moyen d'une variation virtuelle des angles de commutation variables de façon virtuelle.

**5.** Procédé pour faire fonctionner de façon optimisée un convertisseur statique raccordé à un réseau par l'intermédiaire d'une prise et comportant des éléments de commutation pour produire une grandeur de sortie pulsée à la sortie du convertisseur statique, présentant les caractéristiques suivantes :

a) au débat d'un cycle d'optimisation, les coefficients de Fourier ($Us(k.\omega_0)$, $Un(k.\omega_0)$) de la grandeur de sortie pulsée ($Us(t)$) et d'une grandeur électrique ($Un(t)$), qui dépend de la grandeur de sortie pulsée présente sur la prise, ainsi que sa fonction de transfert ($Gn(k.\omega_0)$) sont déterminées, et

b) des instants de commutation pour l'activation des éléments de commutation sont modifiés jusqu'à ce qu'une fonction cible ($Uab$) des instants de commutation prennent une valeur optimale,

c) la fonction cible contenant des composantes de Fourier modèles ($a_k$, $b_k$) pour la grandeur de sortie pulsée, qui sont pondérées par la fonction de transfert ($Gn(k.\omega_0)$) et sont des fonctions des instants de commutation ($ti$).

**6.** Procédé suivant la revendication 5, caractérisé par le fait que les instants de commutation sont modifiés virtuellement en tant que variables des fonctions jusqu'à ce que la fonction cible prenne la valeur optimale pour les valeurs optimales des instants de commutation modifiés de façon virtuelle et qu'après détermination des valeurs optimales, les éléments de commutation sont actionnés respectivement à des instants qui sont prédéterminés par les valeurs optimisées.

**7.** Procédé suivant la revendication 6, caractérisé par le fait que la valeur optimale de la fonction cible est obtenue lorsque la valeur moyenne effective de l'écart d'une grandeur modèle déterminée par les composantes de Fourier modèles, par rapport à une grandeur prédéterminée par des valeurs de consigne est minimale.

**8.** Procédé suivant la revendication 5, caractérisé par le fait que les instants de commutation sont modifiés virtuellement conformément à l'algorithme mathématique suivant :

(i) le nombre des instants de commutation est prédéterminé, une variable virtuelle est associée à chaque instant de commutation, des fonctions, qui décrivent selon un modèle mathématique la grandeur de sortie pulsée du convertisseur statique, sont associées aux variables virtuelles, et des coefficients de Fourier modèles, qui décrivent, en fonction des variables, les coefficients de Fourier de la grandeur de sortie pulsée, sont prélevés des fonctions,

(ii) les coefficients de la fonction de transfert sont associés, en tant que facteurs de pondération indépendants du temps, aux coefficients de Fourier modèles, et une fonction cible est associée aux coefficients de Fourier modèles pondérés par les facteurs,

(iii) pour la fonction cible, les valeurs optimisées des variables, pour lesquelles la fonction cible possède un minimum, sont calculées, et

qu'au moyen de la comparaison des valeurs optimisées avec l'angle de phase ($\phi(t)$) d'une tension de référence synchronisée sur l'oscillation fondamentale de Fourier ($\omega_0.t$) sont déterminés les instants de commutation, pour lesquels les éléments de commutation du convertisseur statique sont activés.

**9.** Procédé pour optimiser le fonctionnement d'un convertisseur statique raccordé à un réseau et comportant des éléments de commutation pour produire une grandeur de sortie pulsée, présentant les caractéristiques suivantes :

a) sous l'effet de l'activation des éléments de commutation, la grandeur de sortie pulsée est injectée à l'extrémité, située du côté du convertisseur statique, d'un élément d'impédance disposé entre le convertisseur statique et le réseau,

b) au début d'un cycle d'optimisation, une grandeur d'état électrique ($Un(t)$) est mesurée à l'extrémité, située côté réseau, de l'élément d'impédance et des premiers coefficients de Fourier ($G(k.\omega_0)$), qui déterminent la fonction de transfert de l'élément d'impédance, sont déterminés par une transformation de Fourier,

c) pour la grandeur de sortie pulsée, sont déterminés des seconds coefficients de Fourier ($a_k$, $b_k$), qui varient en fonction de la grandeur de sortie pulsée lorsque les instants ($ti$), qui sont rapportés à une période de la fréquence de base prédéterminée et auxquels les éléments de commutation sont activés, sont modifiés,

25

d) les instants de commutation optimisés sont déterminés à partir de la condition selon laquelle, dans le cas d'instants optimisés de commutation, une fonction cible (Uab), qui contient les seconds coefficients de Fourier pondérés par les premiers coefficients de Fourier, prend une valeur optimale, et

e) les éléments de commutation sont activés aux instants de commutation optimisés.

**10.** Procédé suivant la revendication 9, caractérisé par le fait que les seconds coefficients de Fourier sont prélevés, en tant que fonctions d'instants de commutation virtuelles, d'un modèle mathématique du convertisseur statique et que les valeurs optimisées sont calculées mathématiquement à partir de ces fonctions et de la condition.

**11.** Procédé suivant la revendication 10, caractérisé par le fait que pour les instants de commutation virtuels ($\underline{\Phi}$), des valeurs de départ ($\underline{\Phi}$(O)) sont prédéterminées, et les valeurs optimisées sont calculées au moyen d'une variation virtuelle ($\underline{\Phi} + \lambda.\underline{\Delta\Phi}$) des valeurs initiales.

**12.** Procédé suivant la revendication 9, caractérisé par le fait qu'une suite d'impulsions de tension est injectée, en tant que grandeur de sortie pulsée (Us(t)), à l'extrémité, située du côté du convertisseur statique, de l'impédance, et que la tension du réseau (Un(t)), prélevée du réseau, est mesurée en tant que grandeur électrique dépendante, sur l'extrémité, située côté réseau, de l'élément d'impédance.

**13.** Dispositif pour faire fonctionner de façon optimisée un convertisseur statique raccordé par l'intermédiaire d'une prise à un réseau et comportant des éléments de commutation, pour produire une grandeur de sortie pulsée, comportant

a) un dispositif de mesure (MNET), qui est monté sur la prise et sert à délivrer une grandeur d'état électrique (Un(t)) de la prise, et

b) un dispositif de calcul et de commande (PROC), comportant

i) un premier étage de calcul (FFT) pour réaliser la transformation de Fourier du signal reçu par le dispositif de mesure,

ii) un second étage à calcul (VAR), qui est alimenté par des premiers coefficients de Fourier (Gn-($k.\omega_0$)), formés dans le premier étage de calcul, et qui travaille selon le programme suivant :
- un nombre d'angles de commutation prédéterminés (ti) est associé à un état de fonctionnement prédéterminé ($\underline{\Phi}$) et un nombre identique d'angles de commutation modifiés est associé à un état de fonctionnement modifié ($\underline{\Phi} + \lambda.\Delta\Phi$),
- des seconds coefficients de Fourier ($a_k$, $b_k$) sont associés à chaque état de fonctionnement,
- une fonction cible de l'état de fonctionnement, qui contient les premiers coefficients de Fourier (G($k.\omega_0$)) et les seconds coefficients de Fourier ($a_k$, $b_k$) associés aux états de fonctionnement variables, est définie,
- un état de fonctionnement optimum, pour lequel la fonction cible satisfait à un critère d'optimisation, est défini,
- à partir du critère d'optimisation de la fonction cible est déterminé l'état de fonctionnement, pour lequel les seconds coefficients de Fourier, qui sont contenus dans la fonction cible et dépendent de l'état de fonctionnement variable, prennent les valeurs, pour lesquelles la fonction cible satisfait aux critères d'optimisation, et
- les angles de commutation associés à l'état de fonctionnement déterminé sont mémorisés, et

iii) les angles de commutation mémorisés sont envoyés à des moyens de formation d'impulsions, qui produisent, par comparaison à l'angle de phase d'une tension de référence synchronisée sur l'oscillation harmonique de base de la transformation de Fourier, des impulsions d'amorçage qui déclenchent une activation des éléments de commutation du convertisseur statique.

**14.** Dispositif suivant la revendication 13, caractérisé par un second dispositif de mesure (MDC), disposé sur la prise et servant à mesurer la grandeur de sortie pulsée du convertisseur statique, dont le signal de mesure est également envoyé au premier étage de calcul.

**15.** Dispositif suivant la revendication 13, caractérisé par le fait que le dispositif de calcul et de commande comporte des moyens qui alimentent les moyens de formation d'impulsions avec des valeurs initiales qui sont déterminées à partir de valeurs de consigne prédéterminées, pour les angles de commande et prédéterminent, pour le second étage de calcul, des valeurs initiales pour l'état de fonctionnement.

**16.** Dispositif suivant la revendication 13, caractérisé par le fait que les moyens de formation d'impulsions sont alimentés sans modification, respectivement jusqu'à la mémorisation réitérée des angles de commutation optimum, avec les angles de commande mémorisés.

**17.** Dispositif pour faire fonctionner de façon optimisée un convertisseur statique raccordé à un réseau par l'intermédiaire d'une prise à un réseau et comportant des éléments de commutation, pour produire une grandeur de sortie pulsée, et dans lequel

a) un élément d'impédance (LCR) est disposé entre le convertisseur statique (DC) et le réseau (NET),

b) à l'extrémité, située côté réseau, de l'élément d'impédance est disposé un dispositif de mesure (MNET), dont le signal de sortie est envoyé à un dispositif de commande et de régulation,

c) le dispositif de commande et de régulation comporte un premier étage de calcul (FFT) servant à appliquer la transformation de Fourier au signal reçu,

d) les coefficients de Fourier ($Gn(k.\omega_0)$) calculés par le premier étage de calcul, sont envoyés à un second étage de calcul (FKT, VAR), qui est commandé conformément au programme suivant :

i) un nombre de variables (ti) est associé à chaque état de fonctionnement ($\Phi$),

aux harmoniques ($k.\omega_0$) de la transformation de Fourier sont associées des fonctions ($a_k$, $b_k$) des variables, qui sont tirées d'un modèle mathématique et représentent des coefficients de Fourier modèles de la grandeur de sortie pulsée du convertisseur statique, et une fonction cible des variables est définie, qui dépend des coefficients de Fourier ($G(k.\omega_0)$) de la fonction de transfert et des coefficients de Fourier modèles ($a_k$, $b_k$),

un critère d'optimisation ($U_{ab}$ minimum) est défini, auquel satisfait la fonction dans le cas de valeurs optimisées des variables,

ii) conformément à ces conventions prises comme bases, les valeurs optimisées des angles d'amorçage sont calculées à partir du critère d'optimisation de la fonction cible, conformément à un procédé mathématique, au moyen de coefficients de Fourier formés dans le premier étage de calcul,

iii) les valeurs calculées sont mémorisées temporairement et envoyées à un étage de formation d'impulsions (MP), qui délivrent des impulsions servant à activer les éléments de commutation, au moyen d'une comparaison des valeurs (ti) mémorisées temporairement à l'angle de phase ($\phi$-(t)) d'une tension de référence synchronisée sur la fréquence fondamentale de la transformation de Fourier.

**18.** Dispositif suivant la revendication 17, caractérisé par le fait que le dispositif de mesure (MNET) est un dispositif de mesure de tension.

**19.** Dispositif suivant la revendication 17, caractérisé par le fait que sur l'extrémité, située du côté du convertisseur statique, de l'élément d'impédance est disposé un second dispositif de mesure de tension (MDC), dont la sortie est raccordée au premier étage de calcul.

FIG 1

FIG 2

FIG 3

FIG 4

FIG 5

FIG 6

FIG 7

FIG 10

FIG 11

FIG 12

FIG 8

FIG 9

FIG 13

FIG 14

U

0,25

U(t)

$\omega_0 t$

$\pi = \omega_0 \cdot t'$

**FIG 15**

U

ta

t

+

U

te

t

=

U(t)

t

**FIG 16**

FIG 17

**FIG 18**

**FIG 19**

**FIG 22**

FIG 20

FIG 21